# EUROPEAN PATENT APPLICATION

(11) **EP 4 730 909 A2**
(43) Date of publication of application: **22.04.2026**
(21) Application number: 25226882.6
(22) Date of filing: 11.07.2024
(51) Int. Cl.: H04W 84/12

(54) **APPARATUS, SYSTEM, AND METHOD OF WIRELESS MEDIUM PRIORITIZED ACCESS**

(30) Priority: 30.09.2023 US 202318479008
(62) Divisional of application: 24187997.2
(71) Applicant: Intel Corporation, Santa Clara, CA 95054 (US)
(72) Inventor: CARIOU, Laurent, 29290 Milizac (FR); KENNEY, Thomas J., Portland, 97229 (US); AKHMETOV, Dmitry, Hillsboro, 97124 (US); DAS, Dibakar, Hillsboro, 97123 (US)
(74) Representative: Viering, Jentschura & Partner mbB Patent- und Rechtsanwälte

(57) **Abstract**

For example, an Access Point (AP) may be configured to transmit a frame including a prioritized-access enabled/disabled field to indicate whether a prioritized-access contention mechanism is to be enabled or disabled over a wireless medium. For example, the prioritized-access contention mechanism may be configured to allow a prioritized station (STA) to transmit a reservation signal over the wireless medium at a reservation signal transmission time, and to contend the wireless medium according to a high-priority contention policy to obtain a Transmit Opportunity (TxOP) after transmission of the reservation signal. For example, the reservation signal transmission time may be based on an end of a predefined time duration from a start of a contention period. For example, the reservation signal may be configured to indicate a busy Clear Channel Assessment (CCA) to a receiving STA.

## Description

### BACKGROUND

Devices in a wireless communication system may be configured to contend a wireless medium to obtain a Transmit Opportunity (TxOP) for transmission of data.

### BRIEF DESCRIPTION OF THE DRAWINGS

For simplicity and clarity of illustration, elements shown in the figures have not necessarily been drawn to scale. For example, the dimensions of some of the elements may be exaggerated relative to other elements for clarity of presentation. Furthermore, reference numerals may be repeated among the figures to indicate corresponding or analogous elements. The figures are listed below.
Fig. 1 is a schematic block diagram illustration of a system, in accordance with some demonstrative aspects.
Fig. 2 is a schematic illustration of a prioritized-access element, in accordance with some demonstrative aspects.
Fig. 3 is a schematic flow-chart illustration of a method of wireless medium prioritized access, in accordance with some demonstrative aspects.
Fig. 4 is a schematic flow-chart illustration of a method of wireless medium prioritized access, in accordance with some demonstrative aspects.
Fig. 5 is a schematic illustration of a product of manufacture, in accordance with some demonstrative aspects.

### DETAILED DESCRIPTION

In the following detailed description, numerous specific details are set forth in order to provide a thorough understanding of some aspects. However, it will be understood by persons of ordinary skill in the art that some aspects may be practiced without these specific details. In other instances, well-known methods, procedures, components, units and/or circuits have not been described in detail so as not to obscure the discussion.

Discussions herein utilizing terms such as, for example, "processing", "computing", "calculating", "determining", "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

The terms "plurality" and "a plurality", as used herein, include, for example, "multiple" or "two or more". For example, "a plurality of items" includes two or more items.

References to "one aspect", "an aspect", "demonstrative aspect", "various aspects" etc., indicate that the aspect(s) so described may include a particular feature, structure, or characteristic, but not every aspect necessarily includes the particular feature, structure, or characteristic. Further, repeated use of the phrase "in one aspect" does not necessarily refer to the same aspect, although it may.

As used herein, unless otherwise specified the use of the ordinal adjectives "first", "second", "third" etc., to describe a common object, merely indicate that different instances of like objects are being referred to, and are not intended to imply that the objects so described must be in a given sequence, either temporally, spatially, in ranking, or in any other manner.

Some aspects may be used in conjunction with various devices and systems, for example, a User Equipment (UE), a Mobile Device (MD), a wireless station (STA), a Personal Computer (PC), a desktop computer, a mobile computer, a laptop computer, a notebook computer, a tablet computer, a server computer, a handheld computer, a handheld device, a wearable device, a sensor device, an Internet of Things (IoT) device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some aspects may be used in conjunction with devices and/or networks operating in accordance with existing IEEE 802.11 standards (including IEEE 802.11-2020 *(*IEEE 802.11-2020, IEEE Standard for Information Technology-Telecommunications and Information Exchange between Systems Local and Metropolitan Area Networks-Specific Requirements; Part 11: Wireless LAN Medium Access Control (MAC) and Physical Layer (PHY) Specifications, December, 2020*))* and/or future versions and/or derivatives thereof, devices and/or networks operating in accordance with existing cellular specifications and/or protocols, and/or future versions and/or derivatives thereof, units and/or devices which are part of the above networks, and the like.

Some aspects may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multistandard radio devices or systems, a wired or wireless handheld device, e.g., a Smartphone, a Wireless Application Protocol (WAP) device, or the like.

Some aspects may be used in conjunction with one or more types of wireless communication signals and/or systems, for example, Radio Frequency (RF), Infra-Red (IR), Frequency-Division Multiplexing (FDM), Orthogonal FDM (OFDM), Orthogonal Frequency-Division Multiple Access (OFDMA), FDM Time-Division Multiplexing (TDM), Time-Division Multiple Access (TDMA), Multi-User MIMO (MU-MIMO), Spatial Division Multiple Access (SDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth^{®}, Global Positioning System (GPS), Wi-Fi, Wi-Max, ZigBee^{™}, Ultra-Wideband (UWB), 4G, Fifth Generation (5G), or Sixth Generation (6G) mobile networks, 3GPP, Long Term Evolution (LTE), LTE advanced, Enhanced Data rates for GSM Evolution (EDGE), or the like. Other aspects may be used in various other devices, systems and/or networks.

The term "wireless device", as used herein, includes, for example, a device capable of wireless communication, a communication device capable of wireless communication, a communication station capable of wireless communication, a portable or non-portable device capable of wireless communication, or the like. In some demonstrative aspects, a wireless device may be or may include a peripheral that may be integrated with a computer, or a peripheral that may be attached to a computer. In some demonstrative aspects, the term "wireless device" may optionally include a wireless service.

The term "communicating" as used herein with respect to a communication signal includes transmitting the communication signal and/or receiving the communication signal. For example, a communication unit, which is capable of communicating a communication signal, may include a transmitter to transmit the communication signal to at least one other communication unit, and/or a communication receiver to receive the communication signal from at least one other communication unit. The verb communicating may be used to refer to the action of transmitting or the action of receiving. In one example, the phrase "communicating a signal" may refer to the action of transmitting the signal by a first device, and may not necessarily include the action of receiving the signal by a second device. In another example, the phrase "communicating a signal" may refer to the action of receiving the signal by a first device, and may not necessarily include the action of transmitting the signal by a second device. The communication signal may be transmitted and/or received, for example, in the form of Radio Frequency (RF) communication signals, and/or any other type of signal.

As used herein, the term "circuitry" may refer to, be part of, or include, an Application Specific Integrated Circuit (ASIC), an integrated circuit, an electronic circuit, a processor (shared, dedicated or group), and/or memory (shared. Dedicated, or group), that execute one or more software or firmware programs, a combinational logic circuit, and/or other suitable hardware components that provide the described functionality. In some aspects, some functions associated with the circuitry may be implemented by, one or more software or firmware modules. In some aspects, circuitry may include logic, at least partially operable in hardware.

The term "logic" may refer, for example, to computing logic embedded in circuitry of a computing apparatus and/or computing logic stored in a memory of a computing apparatus. For example, the logic may be accessible by a processor of the computing apparatus to execute the computing logic to perform computing functions and/or operations. In one example, logic may be embedded in various types of memory and/or firmware, e.g., silicon blocks of various chips and/or processors. Logic may be included in, and/or implemented as part of, various circuitry, e.g. radio circuitry, receiver circuitry, control circuitry, transmitter circuitry, transceiver circuitry, processor circuitry, and/or the like. In one example, logic may be embedded in volatile memory and/or non-volatile memory, including random access memory, read only memory, programmable memory, magnetic memory, flash memory, persistent memory, and the like. Logic may be executed by one or more processors using memory, e.g., registers, stuck, buffers, and/or the like, coupled to the one or more processors, e.g., as necessary to execute the logic.

Some demonstrative aspects may be used in conjunction with a WLAN, e.g., a WiFi network. Other aspects may be used in conjunction with any other suitable wireless communication network, for example, a wireless area network, a "piconet", a WPAN, a WVAN and the like.

Some demonstrative aspects may be used in conjunction with a wireless communication network communicating over a sub-10 Gigahertz (GHz) frequency band, for example, a 2.4GHz frequency band, a 5GHz frequency band, a 6GHz frequency band, and/or any other frequency band below 10GHz.

Some demonstrative aspects may be used in conjunction with a wireless communication network communicating over an Extremely High Frequency (EHF) band (also referred to as the "millimeter wave (mmWave)" frequency band), for example, a frequency band within the frequency band of between 20Ghz and 300GHz, for example, a frequency band above 45GHz, e.g., a 60GHz frequency band, and/or any other mmWave frequency band. Some demonstrative aspects may be used in conjunction with a wireless communication network communicating over the sub-10 GHz frequency band and/or the mmWave frequency band, e.g., as described below. However, other aspects may be implemented utilizing any other suitable wireless communication frequency bands, for example, a 5G frequency band, a frequency band below 20GHz, a Sub 1 GHz (S1G) band, a WLAN frequency band, a WPAN frequency band, and the like.

Some demonstrative aspects may be implemented by an mmWave STA (mSTA), which may include for example, a STA having a radio transmitter, which is capable of operating on a channel that is within the mmWave frequency band. In one example, mmWave communications may involve one or more directional links to communicate at a rate of multiple gigabits per second, for example, at least 1 Gigabit per second, e.g., at least 7 Gigabit per second, at least 30 Gigabit per second, or any other rate.

In some demonstrative aspects, the mmWave STA may include a Directional Multi-Gigabit (DMG) STA, which may be configured to communicate over a DMG frequency band. For example, the DMG band may include a frequency band wherein the channel starting frequency is above 45 GHz.

In some demonstrative aspects, the mmWave STA may include an Enhanced DMG (EDMG) STA, which may be configured to implement one or more mechanisms, which may be configured to enable Single User (SU) and/or Multi-User (MU) communication of Downlink (DL) and/or Uplink frames (UL) using a MIMO scheme. For example, the EDMG STA may be configured to implement one or more channel bonding mechanisms, which may, for example, support communication over a channel bandwidth (BW) (also referred to as a "wide channel", an "EDMG channel", or a "bonded channel") including two or more channels, e.g., two or more 2.16 GHz channels. For example, the channel bonding mechanisms may include, for example, a mechanism and/or an operation whereby two or more channels, e.g., 2.16 GHz channels, can be combined, e.g., for a higher bandwidth of packet transmission, for example, to enable achieving higher data rates, e.g., when compared to transmissions over a single channel. Some demonstrative aspects are described herein with respect to communication over a channel BW including two or more 2.16 GHz channels, however other aspects may be implemented with respect to communications over a channel bandwidth, e.g., a "wide" channel, including or formed by any other number of two or more channels, for example, an aggregated channel including an aggregation of two or more channels. For example, the EDMG STA may be configured to implement one or more channel bonding mechanisms, which may, for example, support an increased channel bandwidth, for example, a channel BW of 4.32 GHz, a channel BW of 6.48 GHz, a channel BW of 8.64 GHz, and/or any other additional or alternative channel BW. The EDMG STA may perform other additional or alternative functionality.

In other aspects, the mmWave STA may include any other type of STA and/or may perform other additional or alternative functionality. Other aspects may be implemented by any other apparatus, device and/or station.

The term "antenna", as used herein, may include any suitable configuration, structure and/or arrangement of one or more antenna elements, components, units, assemblies and/or arrays. In some aspects, the antenna may implement transmit and receive functionalities using separate transmit and receive antenna elements. In some aspects, the antenna may implement transmit and receive functionalities using common and/or integrated transmit/receive elements. The antenna may include, for example, a phased array antenna, a single element antenna, a set of switched beam antennas, and/or the like.

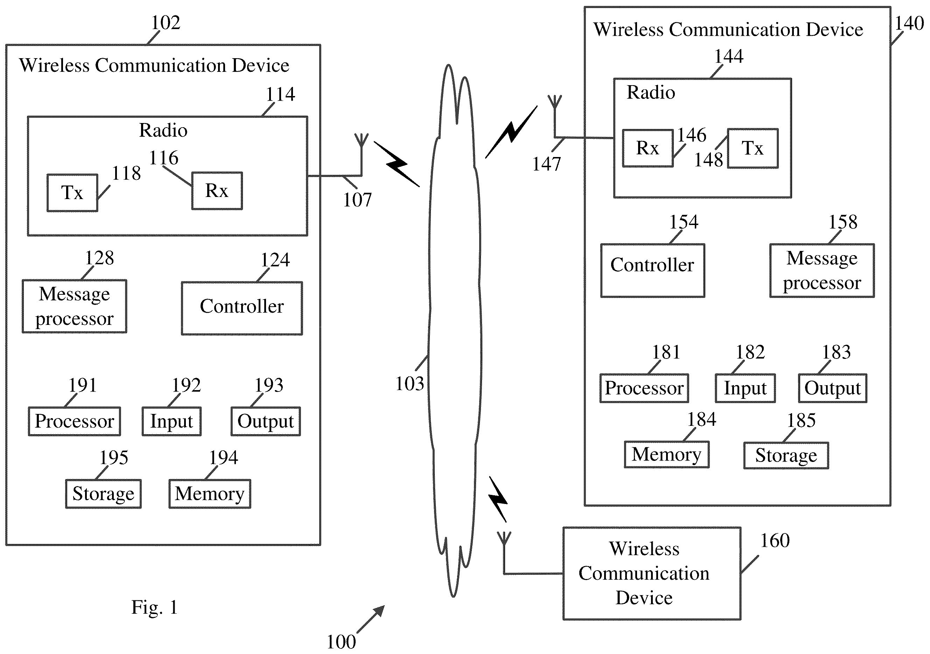

Reference is made to Fig. 1, which schematically illustrates a system 100, in accordance with some demonstrative aspects.

As shown in Fig. 1, in some demonstrative aspects, system 100 may include one or more wireless communication devices. For example, system 100 may include a wireless communication device 102, a wireless communication device 140, a wireless communication device 160, and/or one more other devices.

In some demonstrative aspects, devices 102, 140, and/or 160 may include a mobile device or a non-mobile, e.g., a static, device.

For example, devices 102, 140, and/or 160 may include, for example, a UE, an MD, a STA, an AP, a PC, a desktop computer, a mobile computer, a laptop computer, an Ultrabook^{™} computer, a notebook computer, a tablet computer, a server computer, a handheld computer, an Internet of Things (IoT) device, a sensor device, a handheld device, a wearable device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "Carry Small Live Large" (CSLL) device, an Ultra Mobile Device (UMD), an Ultra Mobile PC (UMPC), a Mobile Internet Device (MID), an "Origami" device or computing device, a device that supports Dynamically Composable Computing (DCC), a context-aware device, a video device, an audio device, an A/V device, a Set-Top-Box (STB), a Blu-ray disc (BD) player, a BD recorder, a Digital Video Disc (DVD) player, a High Definition (HD) DVD player, a DVD recorder, a HD DVD recorder, a Personal Video Recorder (PVR), a broadcast HD receiver, a video source, an audio source, a video sink, an audio sink, a stereo tuner, a broadcast radio receiver, a flat panel display, a Personal Media Player (PMP), a digital video camera (DVC), a digital audio player, a speaker, an audio receiver, an audio amplifier, a gaming device, a data source, a data sink, a Digital Still camera (DSC), a media player, a Smartphone, a television, a music player or the like.

In some demonstrative aspects, device 102 may include, for example, one or more of a processor 191, an input unit 192, an output unit 193, a memory unit 194, and/or a storage unit 195; and/or device 140 may include, for example, one or more of a processor 181, an input unit 182, an output unit 183, a memory unit 184, and/or a storage unit 185. Devices 102 and/or 140 may optionally include other suitable hardware components and/or software components. In some demonstrative aspects, some or all of the components of one or more of devices 102 and/or 140 may be enclosed in a common housing or packaging, and may be interconnected or operably associated using one or more wired or wireless links. In other aspects, components of one or more of devices 102 and/or 140 may be distributed among multiple or separate devices.

In some demonstrative aspects, processor 191 and/or processor 181 may include, for example, a Central Processing Unit (CPU), a Digital Signal Processor (DSP), one or more processor cores, a single-core processor, a dual-core processor, a multiple-core processor, a microprocessor, a host processor, a controller, a plurality of processors or controllers, a chip, a microchip, one or more circuits, circuitry, a logic unit, an Integrated Circuit (IC), an Application-Specific IC (ASIC), or any other suitable multi-purpose or specific processor or controller. Processor 191 may execute instructions, for example, of an Operating System (OS) of device 102 and/or of one or more suitable applications. Processor 181 may execute instructions, for example, of an Operating System (OS) of device 140 and/or of one or more suitable applications.

In some demonstrative aspects, input unit 192 and/or input unit 182 may include, for example, a keyboard, a keypad, a mouse, a touch-screen, a touch-pad, a track-ball, a stylus, a microphone, or other suitable pointing device or input device. Output unit 193 and/or output unit 183 may include, for example, a monitor, a screen, a touch-screen, a flat panel display, a Light Emitting Diode (LED) display unit, a Liquid Crystal Display (LCD) display unit, a plasma display unit, one or more audio speakers or earphones, or other suitable output devices.

In some demonstrative aspects, memory unit 194 and/or memory unit 184 includes, for example, a Random Access Memory (RAM), a Read Only Memory (ROM), a Dynamic RAM (DRAM), a Synchronous DRAM (SD-RAM), a flash memory, a volatile memory, a non-volatile memory, a cache memory, a buffer, a short term memory unit, a long term memory unit, or other suitable memory units. Storage unit 195 and/or storage unit 185 may include, for example, a hard disk drive, a disk drive, a solid-state drive (SSD), and/or other suitable removable or non-removable storage units. Memory unit 194 and/or storage unit 195, for example, may store data processed by device 102. Memory unit 184 and/or storage unit 185, for example, may store data processed by device 140.

In some demonstrative aspects, wireless communication devices 102, 140, and/or 160 may be capable of communicating content, data, information and/or signals via a wireless medium (WM) 103. In some demonstrative aspects, wireless medium 103 may include, for example, a radio channel, an RF channel, a WiFi channel, a cellular channel, a 5G channel, an IR channel, a Bluetooth (BT) channel, a Global Navigation Satellite System (GNSS) Channel, and the like.

In some demonstrative aspects, WM 103 may include one or more wireless communication frequency bands and/or channels. For example, WM 103 may include one or more channels in a sub-10Ghz wireless communication frequency band, for example, a 2.4GHz wireless communication frequency band, one or more channels in a 5GHz wireless communication frequency band, and/or one or more channels in a 6GHz wireless communication frequency band. In another example, WM 103 may additionally or alternatively include one or more channels in an mmWave wireless communication frequency band. In other aspects, WM 103 may include any other type of channel over any other frequency band.

In some demonstrative aspects, device 102, device 140, and/or device 160 may include one or more radios including circuitry and/or logic to perform wireless communication between devices 102, 140, 160, and/or one or more other wireless communication devices. For example, device 102 may include one or more radios 114, and/or device 140 may include one or more radios 144.

In some demonstrative aspects, radios 114 and/or radios 144 may include one or more wireless receivers (Rx) including circuitry and/or logic to receive wireless communication signals, RF signals, frames, blocks, transmission streams, packets, messages, data items, and/or data. For example, a radio 114 may include at least one receiver 116, and/or a radio 144 may include at least one receiver 146.

In some demonstrative aspects, radios 114 and/or 144 may include one or more wireless transmitters (Tx) including circuitry and/or logic to transmit wireless communication signals, RF signals, frames, blocks, transmission streams, packets, messages, data items, and/or data. For example, a radio 114 may include at least one transmitter 118, and/or a radio 144 may include at least one transmitter 148.

In some demonstrative aspects, radios 114 and/or 144, transmitters 118 and/or 148, and/or receivers 116 and/or 146 may include circuitry; logic; Radio Frequency (RF) elements, circuitry and/or logic; baseband elements, circuitry and/or logic; modulation elements, circuitry and/or logic; demodulation elements, circuitry and/or logic; amplifiers; analog to digital and/or digital to analog converters; filters; and/or the like. For example, radios 114 and/or 144 may include or may be implemented as part of a wireless Network Interface Card (NIC), and the like.

In some demonstrative aspects, radios 114 and/or 144 may be configured to communicate over a 2.4GHz band, a 5GHz band, a 6GHz band, and/or any other band, for example, a directional band, e.g., an mmWave band, a 5G band, an S1G band, and/or any other band.

In some demonstrative aspects, radios 114 and/or 144 may include, or may be associated with one or more antennas.

In some demonstrative aspects, device 102 may include one or more antennas 107, and/or device 140 may include on or more antennas 147.

Antennas 107 and/or 147 may include any type of antennas suitable for transmitting and/or receiving wireless communication signals, blocks, frames, transmission streams, packets, messages and/or data. For example, antennas 107 and/or 147 may include any suitable configuration, structure and/or arrangement of one or more antenna elements, components, units, assemblies and/or arrays. In some aspects, antennas 107 and/or 147 may implement transmit and receive functionalities using separate transmit and receive antenna elements. In some aspects, antennas 107 and/or 147 may implement transmit and receive functionalities using common and/or integrated transmit/receive elements.

In some demonstrative aspects, device 102 may include a controller 124, and/or device 140 may include a controller 154. Controller 124 may be configured to perform and/or to trigger, cause, instruct and/or control device 102 to perform, one or more communications, to generate and/or communicate one or more messages and/or transmissions, and/or to perform one or more functionalities, operations and/or procedures between devices 102, 140, 160 and/or one or more other devices; and/or controller 154 may be configured to perform, and/or to trigger, cause, instruct and/or control device 140 to perform, one or more communications, to generate and/or communicate one or more messages and/or transmissions, and/or to perform one or more functionalities, operations and/or procedures between devices 102, 140, 160 and/or one or more other devices, e.g., as described below.

In some demonstrative aspects, controllers 124 and/or 154 may include, or may be implemented, partially or entirely, by circuitry and/or logic, e.g., one or more processors including circuitry and/or logic, memory circuitry and/or logic, Media-Access Control (MAC) circuitry and/or logic, Physical Layer (PHY) circuitry and/or logic, baseband (BB) circuitry and/or logic, a BB processor, a BB memory, Application Processor (AP) circuitry and/or logic, an AP processor, an AP memory, and/or any other circuitry and/or logic, configured to perform the functionality of controllers 124 and/or 154, respectively. Additionally or alternatively, one or more functionalities of controllers 124 and/or 154 may be implemented by logic, which may be executed by a machine and/or one or more processors, e.g., as described below.

In one example, controller 124 may include circuitry and/or logic, for example, one or more processors including circuitry and/or logic, to cause, trigger and/or control a wireless device, e.g., device 102, and/or a wireless station, e.g., a wireless STA implemented by device 102, to perform one or more operations, communications and/or functionalities, e.g., as described herein. In one example, controller 124 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In one example, controller 154 may include circuitry and/or logic, for example, one or more processors including circuitry and/or logic, to cause, trigger and/or control a wireless device, e.g., device 140, and/or a wireless station, e.g., a wireless STA implemented by device 140, to perform one or more operations, communications and/or functionalities, e.g., as described herein. In one example, controller 154 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In some demonstrative aspects, at least part of the functionality of controller 124 may be implemented as part of one or more elements of radio 114, and/or at least part of the functionality of controller 154 may be implemented as part of one or more elements of radio 144.

In other aspects, the functionality of controller 124 may be implemented as part of any other element of device 102, and/or the functionality of controller 154 may be implemented as part of any other element of device 140.

In some demonstrative aspects, device 102 may include a message processor 128 configured to generate, process and/or access one or messages communicated by device 102.

In one example, message processor 128 may be configured to generate one or more messages to be transmitted by device 102, and/or message processor 128 may be configured to access and/or to process one or more messages received by device 102, e.g., as described below.

In one example, message processor 128 may include at least one first component configured to generate a message, for example, in the form of a frame, field, information element and/or protocol data unit, for example, a MAC Protocol Data Unit (MPDU); at least one second component configured to convert the message into a PHY Protocol Data Unit (PPDU), for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 128 may be configured to perform any other additional or alternative functionality and/or may include any other additional or alternative components to generate and/or process a message to be transmitted.

In some demonstrative aspects, device 140 may include a message processor 158 configured to generate, process and/or access one or more messages communicated by device 140.

In one example, message processor 158 may be configured to generate one or more messages to be transmitted by device 140, and/or message processor 158 may be configured to access and/or to process one or more messages received by device 140, e.g., as described below.

In one example, message processor 158 may include at least one first component configured to generate a message, for example, in the form of a frame, field, information element and/or protocol data unit, for example, an MPDU; at least one second component configured to convert the message into a PPDU, for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 158 may be configured to perform any other additional or alternative functionality and/or may include any other additional or alternative components to generate and/or process a message to be transmitted.

In some demonstrative aspects, message processors 128 and/or 158 may include, or may be implemented, partially or entirely, by circuitry and/or logic, e.g., one or more processors including circuitry and/or logic, memory circuitry and/or logic, MAC circuitry and/or logic, PHY circuitry and/or logic, BB circuitry and/or logic, a BB processor, a BB memory, AP circuitry and/or logic, an AP processor, an AP memory, and/or any other circuitry and/or logic, configured to perform the functionality of message processors 128 and/or 158, respectively. Additionally or alternatively, one or more functionalities of message processors 128 and/or 158 may be implemented by logic, which may be executed by a machine and/or one or more processors, e.g., as described below.

In some demonstrative aspects, at least part of the functionality of message processor 128 may be implemented as part of radio 114, and/or at least part of the functionality of message processor 158 may be implemented as part of radio 144.

In some demonstrative aspects, at least part of the functionality of message processor 128 may be implemented as part of controller 124, and/or at least part of the functionality of message processor 158 may be implemented as part of controller 154.

In other aspects, the functionality of message processor 128 may be implemented as part of any other element of device 102, and/or the functionality of message processor 158 may be implemented as part of any other element of device 140.

In some demonstrative aspects, at least part of the functionality of controller 124 and/or message processor 128 may be implemented by an integrated circuit, for example, a chip, e.g., a System on Chip (SoC). In one example, the chip or SoC may be configured to perform one or more functionalities of one or more radios 114. For example, the chip or SoC may include one or more elements of controller 124, one or more elements of message processor 128, and/or one or more elements of one or more radios 114. In one example, controller 124, message processor 128, and one or more radios 114 may be implemented as part of the chip or SoC.

In other aspects, controller 124, message processor 128 and/or one or more radios 114 may be implemented by one or more additional or alternative elements of device 102.

In some demonstrative aspects, at least part of the functionality of controller 154 and/or message processor 158 may be implemented by an integrated circuit, for example, a chip, e.g., a SoC. In one example, the chip or SoC may be configured to perform one or more functionalities of one or more radios 144. For example, the chip or SoC may include one or more elements of controller 154, one or more elements of message processor 158, and/or one or more elements of one or more radios 144. In one example, controller 154, message processor 158, and one or more radios 144 may be implemented as part of the chip or SoC.

In other aspects, controller 154, message processor 158 and/or one or more radios 144 may be implemented by one or more additional or alternative elements of device 140.

In some demonstrative aspects, device 102, device 140, and/or device 160 may include, operate as, perform the role of, and/or perform one or more functionalities of, one or more STAs. For example, device 102 may include at least one STA, device 140 may include at least one STA, and/or device 160 may include at least one STA.

In some demonstrative aspects, device 102, device 140, and/or device 160 may include, operate as, perform the role of, and/or perform one or more functionalities of, one or more Extremely High Throughput (EHT) STAs. For example, device 102 may include, operate as, perform the role of, and/or perform one or more functionalities of, one or more EHT STAs, and/or device 140 may include, operate as, perform the role of, and/or perform one or more functionalities of, one or more EHT STAs.

In some demonstrative aspects, for example, device 102, device 140, and/or device 160 may be configured to perform one or more operations, and/or functionalities of a WiFi 8 STA.

In other aspects, for example, device 102, device 140, and/or device 160 may be configured to perform one or more operations, and/or functionalities of an Ultra High Reliability (UHR) STA.

In other aspects, for example, device 102, device 140, and/or device 160 may be configured to perform one or more operations, and/or functionalities of any other additional or alternative type of STA.

In other aspects, device 102, device 140, and/or device 160 may include, operate as, perform the role of, and/or perform one or more functionalities of, any other wireless device and/or station, e.g., a WLAN STA, a WiFi STA, and the like.

In some demonstrative aspects, device 102, device 140, and/or device 160 may be configured operate as, perform the role of, and/or perform one or more functionalities of, an Access Point (AP), e.g., a High Throughput (HT) AP STA, a High Efficiency (HE) AP STA, an EHT AP STA, and/or a UHR AP STA.

In some demonstrative aspects, device 102, device 140, and/or device 160 may be configured to operate as, perform the role of, and/or perform one or more functionalities of, a non-AP STA, e.g., an HT non-AP STA, an HE non-AP STA, an EHT non-AP STA, and/or a UHR non-AP STA.

In other aspects, device 102, device 140, and/or device 160 may operate as, perform the role of, and/or perform one or more functionalities of, any other additional or alternative device and/or station.

In one example, a station (STA) may include a logical entity that is a singly addressable instance of a medium access control (MAC) and physical layer (PHY) interface to the wireless medium (WM). The STA may perform any other additional or alternative functionality.

In one example, an AP may include an entity that contains one station (STA) and provides access to the distribution services, via the wireless medium (WM) for associated STAs. An AP may include a STA and a distribution system access function (DSAF). The AP may perform any other additional or alternative functionality.

In some demonstrative aspects device 102, device 140, and/or device 160 may be configured to communicate in an HT network, an HE network, an EHT network, a UHR network, and/or any other network.

In some demonstrative aspects, device 102, device 140, and/or device 160 may be configured to operate in accordance with one or more Specifications, for example, including one or more *IEEE 802.11 Specifications,* e.g., an *IEEE 802.11-2020 Specification, an IEEE 802.11ax Specification, an IEEE 802.11be Specification,* and/or any other specification and/or protocol.

In some demonstrative aspects, device 102, device 140, and/or device 160 may include, operate as, perform a role of, and/or perform the functionality of, a Multi-Link Device (MLD). For example, device 102 may include, operate as, perform a role of, and/or perform the functionality of, at least one MLD, device 140 may include, operate as, perform a role of, and/or perform the functionality of, at least one MLD, and/or device 160 may include, operate as, perform a role of, and/or perform the functionality of, at least one MLD, e.g., as described below.

For example, an MLD may include a device that is a logical entity that is capable of supporting more than one affiliated station (STA) and can operate using one or more affiliated STAs. For example, the MLD may present one Medium Access Control (MAC) data service and a single MAC Service Access Point (SAP) to the Logical Link Control (LLC) sublayer. The MLD may perform any other additional or alternative functionality.

In some demonstrative aspects, for example, an infrastructure framework may include a multi-link AP logical entity, which includes APs, e.g., on one side, and a multi-link non-AP logical entity, which includes non-APs, e.g., on the other side.

In some demonstrative aspects, device 102, device 140, and/or device 160 may be configured to operate as, perform the role of, and/or perform one or more functionalities of, an AP MLD.

In some demonstrative aspects, device 102, device 140, and/or device 160 may be configured to operate as, perform the role of, and/or perform one or more functionalities of, a non-AP MLD.

In other aspects, device 102, device 140, and/or device 160 may operate as, perform the role of, and/or perform one or more functionalities of, any other additional or alternative device and/or station.

For example, an AP MLD may include an MLD, where each STA affiliated with the MLD is an AP. In one example, the AP MLD may include a multi-link logical entity, where each STA within the multi-link logical entity is an EHT AP. The AP MLD may perform any other additional or alternative functionality.

For example, a non-AP MLD may include an MLD, where each STA affiliated with the MLD is a non-AP STA. In one example, the non-AP MLD may include a multi-link logical entity, where each STA within the multi-link logical entity is a non-AP EHT STA. The non-AP MLD may perform any other additional or alternative functionality.

In some demonstrative aspects, device 102, device 140, and/or device 160 may include, operate as, perform a role of, and/or perform the functionality of, one or more AP STAs and/or one or more non-AP STAs. In one example, device 102 may include, operate as, perform a role of, and/or perform the functionality of, at least one AP STA, and/or device 140 may include, operate as, perform a role of, and/or perform the functionality of, at least one non-AP STA.

In some demonstrative aspects, device 102 may include, operate as, perform a role of, and/or perform the functionality of, a first STA, e.g., an AP STA or a non-AP STA.

In some demonstrative aspects, device 140 may include, operate as, perform a role of, and/or perform the functionality of, a second STA, e.g., an AP STA or a non-AP STA.

In some demonstrative aspects, device 160 may include, operate as, perform a role of, and/or perform the functionality of, a third STA, e.g., an AP STA or a non-AP STA.

In other aspects, device 102, device 140, and/or device 160 may include, operate as, perform a role of, and/or perform the functionality of any other additional or alternative type of STA.

In some demonstrative aspects, device 102, device 140, and/or device 160 may be configured to implement one or more operations and/or functionalities of a high-priority contention mechanism (also referred to as "prioritized-access contention mechanism" or "prioritized contention mechanism"), e.g., as described below.

In some demonstrative aspects, the high-priority contention mechanism may be configured to provide a technical solution to support improving predictability of latency and/or throughput, for example, for UHR STAs, e.g., as described below.

In some demonstrative aspects, the prioritized-access contention mechanism may be configured to provide a technical solution to improve a mode of using in priority uplink (UL) MU techniques, for example, even without considering Enhanced Distributed Channel Access (EDCA) channel access on an AP side, and/or with coordination between neighboring APs, for example, to better share a wireless medium, e.g., as described below.

In some demonstrative aspects, the high-priority contention mechanism may be configured to provide a technical solution to reduce collisions between STAs, e.g., UHR STAs, for example, to maximally reduce collisions, for example, in order to improve reliability, e.g., as described below.

In some demonstrative aspects, the high-priority contention mechanism may be configured to provide a technical solution, which may be in accordance with an assumption that traffic with high Quality of Service (QoS), e.g., having stringent latency requirements and/or any other suitable high QoS characteristics, may be predictable and/or may be known a-priori.

In some demonstrative aspects, the prioritized-access contention mechanism may be configured to address one or more issues of UL MU techniques.

In one example, changes to the UL MU techniques may be quite sensitive, for example, to legacy devices, non-coordinated overlapping APs or P2P, to coordination difficulties, to scheduling complexities, e.g., with constantly evolving traffic characteristics, and/or the like. For example, although several years have passed since introduction of the UL MU techniques, most networks, e.g., including enterprise networks, are not yet configured to implement the UL MU techniques.

In some demonstrative aspects, device 102, device 140, and/or device 160 may be configured to implement one or more operations and/or functionalities of a prioritized-access contention mechanism, which may be configured to address one or more technical issues of EDCA techniques, e.g., as described below.

In one example, it may seem short-sided to consider EDCA enhancements within UHR networks, for example, to improve predictability and/or latency.

For example, it may be advantageous to provide enhancements to a regular EDCA access mechanism, for example, so that the enhancements may be effectively seen on the field, e.g., in a vast majority of deployments.

In some demonstrative aspects, device 102, device 140, and/or device 160 may be configured to implement one or more operations and/or functionalities of a high-priority (prioritized-access) contention mechanism, which may be configured to provide a technical solution to support one or more wireless communication deployments and/or scenarios including, for example, uncoordinated overlapping Basic Service Sets (BSSs), e.g., a dense apartment, a multi-operators scenario or the like; dense overlapping P2P networks, e.g., in presence or without presence of an infrastructure Extended Service Set (ESS), and/or the any other additional alternative wireless communication deployments and/or scenarios.

In some demonstrative aspects, a wireless communication protocol, e.g., a UHR protocol, may be configured to implement one or more enhancements, which may be configured to support enhanced predictability and/or latency, for example, for a scheduled mode of communication and/or for an unscheduled mode of communication, e.g., as described below.

In some demonstrative aspects, device 102, device 140, and/or device 160 may be configured to implement one or more operations and/or functionalities of a prioritized-access contention mechanism, which may be configured to provide a technical solution to enhance the predictability and/or the latency for the unscheduled mode of communication, e.g., a s described below.

In some demonstrative aspects, device 102, device 140, and/or device 160 may be configured to implement one or more operations and/or functionalities of a high-priority contention mechanism, which may be configured to provide a technical solution to enhance the predictability and/or the latency for EDCA access, e.g., as described below.

In some demonstrative aspects, the high-priority contention mechanism may be configured to address one or more technical issues and/or limitations of an EDCA mechanism, e.g., as described below.

In some demonstrative aspects, in some use cases, scenarios, and/or implementations, there may be one or more limitations, disadvantages and/or technical issues in an implementation of an EDCA mechanism based on collision avoidance with exponential backoff, e.g., as described below.

In one example, an EDCA mechanism based on collision avoidance with exponential backoff may perform well on average. However, the collision avoidance with exponential backoff may lead to a very long latency tail with catastrophic latency events, for example, in case of failed retransmissions and/or doubling backoff.

In another example, an exponential backoff may not be an optimal approach, for example, if the main goal is to bound latency. For example, if a STA was unlucky in a transmission and the transmission collided, the STA shouldn't be deprioritized for channel access, for example, as the STA is actually the one getting closer to a latency bound limit.

In some demonstrative aspects, in some use cases, scenarios, and/or implementations, there may be one or more disadvantages and/or technical issues when implementing EDCA with a QoS mechanism, e.g., as described below.

For example, the QoS mechanism may define that some type of traffic, e.g., traffic with high QoS, may get a higher priority for channel access, and that there may be a cap in exponential backoff.

For example, using the QoS mechanism may result in a situation where traffic with reduced priority, e.g., Best Effort (BE) traffic, may suffer.

In one example, the QoS mechanism may be based on an assumption of proper classification of traffic and proper use of Traffic Identifiers (TIDs) and/or Access categories (ACs), which may not often be the case.

In another example, there may be one or more limitations on a number of STAs, which may efficiently use a high AC, e.g., an AC Voice (AC_VO), for example, without leading to a high number of collisions.

In another example, as backoff may be drawn down to 0, there may be a possibility for back-to-back channel access, which may be too big of a priority.

In another example, even when using a highest AC, there may be a possibility that a channel access may be lost.

In some demonstrative aspects, device 102, device 140, and/or device 160 may be configured to implement one or more operations and/or functionalities of a high-priority contention mechanism, which may be configured to provide a technical solution to improve EDCA, for example, in terms of predictability and/or latency, e.g., as described below.

In some demonstrative aspects, device 102, device 140, and/or device 160 may be configured to implement one or more operations and/or functionalities of a high-priority contention mechanism, which may be configured to provide a technical solution to cut a latency tail, for example, for scenarios with STAs only using Best Effort (AC_BE) traffic, e.g., as described below.

In some demonstrative aspects, device 102, device 140, and/or device 160 may be configured to implement one or more operations and/or functionalities of a high-priority contention mechanism, which may be configured to provide a technical solution to support deployments that are not using QoS. For example, the high-priority contention mechanism may be configured to provide a technical solution to support deployments in which all STAs use BE traffic. These deployments may be a vast majority of conventional deployments.

In some demonstrative aspects, the high-priority (prioritized-access) contention mechanism may be configured to provide a technical solution to reduce a latency tail and/or to bound a worst-case latency, for example, in deployments that are not using QoS, e.g., as described below.

In some demonstrative aspects, the prioritized-access contention mechanism may be configured to provide a technical solution to allow STAs to benefit from a high EDCA priority access, for example, when a STA gets closer to a new worst-case latency bound. For example, if the STA fails multiple transmissions, e.g., its second or third retransmission, the STA may get prioritized access, for example, using a new high-priority AC, e.g., as described below.

In some demonstrative aspects, device 102, device 140, and/or device 160 may be configured to implement one or more operations and/or functionalities of a prioritized-access contention mechanism, which may be configured to provide a technical solution to support scenarios where STAs are using QoS differentiation and/or access categories, e.g., as described below.

In some demonstrative aspects, the high-priority contention mechanism may be configured to provide a technical solution to support deployments using a QoS mechanism and/or access categories. For example, the high-priority contention mechanism may be configured to provide a technical solution to ensure an increased number of chances of channel access for a STA, e.g., compared to the number of chances provided for channel access of the AC_VO, for example, without a risk of collisions, e.g., as described below.

In some demonstrative aspects, the prioritized-access contention mechanism may define a new high-priority AC (also referred to as "prioritized-access AC" or "prioritized AC"), which may be, for example, more aggressive than the AC_VO, e.g., as described below.

In some demonstrative aspects, the high-priority contention mechanism may configure the high-priority AC to scale properly, for example, when more and more STAs use the high-priority AC at a same time, e.g., as described below.

In some demonstrative aspects, the high-priority AC may include a Predictable-Latency (PL) AC (AC_PL), which may be configured, for example, to support traffic with a requirement of predicable latency, e.g., as described below.

In some demonstrative aspects, the AC_PL may be defined according to a channel access technique, which may be different from a conventional contention technique, e.g., as described below.

For example, defining a new AC with very aggressive parameters, e.g., more aggressive than the AC_VO, while using a conventional channel access concept may lead to collisions.

For example, voice AC (AC_VO) may already use very aggressive EDCA parameters. This may lead to a limit on a number of simultaneous STAs, e.g., about 10, which may be allowed to use the AC_VO, e.g., without being too impacted by collisions.

For example, defining a high-priority AC using more aggressive parameters, e.g., compared to the EDCA parameters for AC_VO, may result in a further increase in the number of collisions, and/or in a further limit on the number of simultaneous STAs that can use the high priority AC.

In some demonstrative aspects, controller 124 may be configured to control, trigger, cause, and/or instruct a STA implemented by device 102, e.g., an AP STA, to contend the wireless medium 103, for example, according to a high-priority contention policy, e.g., as described below.

In some demonstrative aspects, controller 154 may be configured to control, trigger, cause, and/or instruct a STA implemented by device 140, e.g., a non-AP STA, to contend the wireless medium 103, for example, according to a high-priority contention policy (also referred to as "prioritized-access contention policy" or "prioritized contention policy"), e.g., as described below.

In some demonstrative aspects, the high-priority contention policy may be configured to define that a STA (also referred to as "high-priority access STA", "prioritized-access STA" or "prioritized STA"), e.g., the AP STA implemented by device 102 and/or the non-AP STA implemented by device 140, may transmit a reservation signal over a wireless medium at a reservation signal transmission time, for example, based on a determination that high-priority data of a high-priority AC is queued at the STA, e.g., as described below.

In some demonstrative aspects, the reservation signal may include, or may be referred to as, a "defer signal", a "priority access signal", a "prioritized-access signal", a "quieting signal", a "high priority AC signal", a "high-priority contention signal", or the like.

In some demonstrative aspects, the reservation signal transmission time may be based, for example, on an end of a predefined time duration from a start of a contention period, e.g., as described below.

In some demonstrative aspects, the defer signal may be configured to indicate a busy Clear Channel Assessment (CCA) to a receiving STA, e.g., as described below. For example, the reservation signal may be configured to indicate a busy CCA to another STA, e.g., a STA implemented by device 160, which may detect and/or receive the reservation signal, e.g., as described below.

In some demonstrative aspects, the prioritized-access contention policy may be configured to define that the prioritized-access STA is to contend the wireless medium, e.g., after transmission of the reservation (defer) signal, for example, according to a high-priority contention policy to obtain a Transmit Opportunity (TxOP) for transmission of the high-priority data, e.g., as described below.

In some demonstrative aspects, the STA transmitting the reservation signal and the high-priority data, e.g., the prioritized-access STA, may include an Ultra High Reliability (UHR) STA, e.g., as described below.

In some demonstrative aspects, the STA transmitting the prioritized-access signal and the high-priority data, e.g., the high-priority access STA, may include a non-AP STA, e.g., as described below.

In some demonstrative aspects, the STA transmitting the reservation signal and the high-priority data, e.g., the prioritized-access STA, may include an AP STA, e.g., as described below.

In other aspects, the STA transmitting the defer signal and the high-priority data, e.g., the high-priority access STA, may include any other additional and/or alternative type of STA.

In some demonstrative aspects, the high-priority AC may include a Predictable-Latency AC (AC_PL), e.g., as described below.

In some demonstrative aspects, the high-priority AC may be configured for a priority higher than a priority of a Voice AC (AC_VO), e.g., as described below.

In other aspects, the high-priority AC may be defined to include any other type of AC.

In some demonstrative aspects, the reservation signal transmission time may be immediately at the end of the predefined time duration from the start of the contention period, e.g., as described below.

In some demonstrative aspects, the prioritized-access contention policy may be configured to define that the prioritized-access STA is to transmit the reservation signal as a non-contention-based transmission, for example, independent of a contention policy of the contention period, e.g., as described below.

In some demonstrative aspects, the reservation (defer) signal may include a preset reservation signal having a preset format and/or content, e.g., as described below.

In some demonstrative aspects, the reservation (defer) signal may include a preset reservation sequence, e.g., as described below.

In other aspects, the reservation (defer) signal may include any other additional and/or alternative format and/or content.

In some demonstrative aspects, the reservation (defer) signal may include a Short Training Field (STF) signal, e.g., as described below.

In some demonstrative aspects, the reservation (defer) signal may include a Long Training Field (LTF) signal, for example, following the STF signal, e.g., as described below.

In other aspects, the reservation (defer) signal may include any other additional and/or alternative sequence, field, and/or signal.

In some demonstrative aspects, the reservation (defer) signal may include a Medium Access Control (MAC) frame, e.g., as described below.

In some demonstrative aspects, the high-priority contention policy may be configured to define that the high-priority access STA is to scramble the MAC frame, for example, according to a preset scrambling seed, e.g., as described below.

In some demonstrative aspects, the preset scrambling seed may be defined, for example, for high-priority reservation signaling, e.g., as described below.

In other aspects, the MAC frame may be scrambled according to any other additional and/or alternative scrambling seed and/or scrambling technique.

In some demonstrative aspects, the MAC frame may include a Clear to Send (CTS) frame, e.g., as described below. For example, the prioritized-access contention policy may be configured to define that the high-priority access STA is to transmit the reservation (defer) signal as a CTS frame, e.g., as described below.

In other aspects, the reservation (defer) signal may be transmitted in the form of any other suitable type of MAC frame.

In other aspects, the reservation signal may include any other additional and/or alternative suitable type of frame and/or signal.

In some demonstrative aspects, the reservation (defer) signal may have a duration of less than 20 microseconds (us), e.g., as described below.

In some demonstrative aspects, the reservation (defer) signal may have a duration of less than 10us, e.g., as described below.

In some demonstrative aspects, the reservation (defer) signal may have a duration of less than 9us, e.g., as described below.

In some demonstrative aspects, the reservation (defer) signal may have a duration of 8us or less, e.g., as described below.

In some demonstrative aspects, the reservation (defer) signal may have a duration of 4us or less, e.g., as described below.

In other aspects, any other suitable duration may be implemented for the reservation (defer) signal.

In some demonstrative aspects, the predefined time duration from the start of the contention period may be based, for example, on an Arbitration Inter-Frame Space (AIFS) corresponding to the high-priority (prioritized-access) AC, e.g., as described below.

In some demonstrative aspects, the AIFS corresponding to the high-priority (prioritized-access) AC may be defined, for example, based on an AIFS Number (AIFSN) corresponding to the high-priority (prioritized-access) AC, e.g., as described below.

In some demonstrative aspects, the AIFSN corresponding to the high-priority AC may be defined, for example, to be relatively low AIFSN, e.g., as described below.

In some demonstrative aspects, the AIFSN corresponding to the high-priority AC may be defined, for example, to be a lowest AIFSN defined by a contention policy of the contention period, e.g., as described below.

In some demonstrative aspects, the AIFSN corresponding to the high-priority AC may be defined, for example, to be less than an AIFSN for a Voice AC (AC_VO), e.g., as described below.

In some demonstrative aspects, the AIFSN corresponding to the high-priority AC may be defined, for example, to be equal to 1, e.g., as described below.

In other aspects, the AIFSN corresponding to the high-priority (prioritized-access) AC may be defined to include any other suitable value.

In other aspects, the predefined time duration from the start of the contention period may be defined based on any other suitable additional or alternative value, parameter and/or criteria.

In some demonstrative aspects, the high-priority (prioritized-access) contention policy may be configured to define that the high-priority access (prioritized-access) STA is to classify a data packet as a high-priority AC packet, for example, based on one or more criteria, e.g., as described below.

In some demonstrative aspects, the high-priority (prioritized-access) contention policy may be configured to define that the high-priority access (prioritized-access) STA is to classify a data packet as a high-priority (prioritized-access) AC packet, for example, based on a failure of a predefined number of retransmissions of the data packet according to a non-high-priority AC, e.g., as described below.

In one example, the high-priority contention policy may be configured to define that the high-priority access (prioritized-access) STA is to use the AC_PL for transmission of a data packet, for example, based on a predefined number of failed retransmissions of the data packet, e.g., 2 or 3 retransmissions, for example, according to a lower AC, e.g., an AC_BE or any other AC.

In some demonstrative aspects, the high-priority (prioritized-access) contention policy may be configured to define that the high-priority access (prioritized-access) STA is to classify a data packet as a high-priority (prioritized-access) AC packet, for example, based on one or more predefined high-priority (prioritized-access) AC classification rules (also referred to as "prioritized-access rules"), e.g., as described below.

In some demonstrative aspects, the high-priority (prioritized-access) contention policy may be configured to support definition of one or more prioritized-access rules, which may be configured to define whether a STA is to be classified as a prioritized STA to be allowed to use the prioritized-access contention mechanism, e.g., as described below.

In some demonstrative aspects, the high-priority (prioritized-access) contention policy may be configured to define one or more specific rules, e.g., prioritized-access rules, which may be utilized to provide a technical solution to regulate, for example, if and/or how STAs are allowed or not allowed to use the prioritized-access mechanism, e.g., as described below.

In some demonstrative aspects, the high-priority (prioritized-access) contention policy may be configured to define one or more specific rules, e.g., prioritized-access rules, which may be utilized to provide a technical solution to regulate, for example, if and/or how STAs are allowed or not allowed to send reservation (defer) signals within a contention period, for example, an EDCA contention period, e.g., as described below.

In one example, the high-priority contention policy may be configured to define that the high-priority access STA is to use the AC_PL, for example, for some prioritized traffic, e.g., which may be defined according to the high-priority AC classification rules.

In some demonstrative aspects, one or more limitations may be defined, for example, for restricting the use of the AC_PL, e.g., as described below.

For example, one or more conditions may be defined for usage of the AC_PL, for example, in case more rules are deemed necessary for this usage.

In one example, usage of the AC_PL may be restricted to traffic that represents only a portion of an available airtime, e.g., up to a predefined portion limit of the available airtime.

In other aspects, the AC_PL may be restricted according to any other additional or alternative criteria.

In some demonstrative aspects, the high-priority (prioritized-access) contention policy may be configured to define that the high-priority access (prioritized-access) STA is to broadcast a message to announce a Service Period (SP) during which the STA is to utilize the high-priority (prioritized-access) AC, e.g., as described below.

For example, it may be defined that that a STA, which intends to use the AC_PL, or an associated AP to which the STA is associated, is to announce in advance, e.g., in a broadcast manner, an indication of a time period, e.g., a SP, during which the STA intends to use the AC_PL. For example, the announcement may indicate that the STA is intending to use the AC_PL during a contention period within the SP.

In one example, the high-priority contention policy may be configured to define that the high-priority access STA is to announce, e.g., in advance, for example, in a broadcast manner, an SP during which the AC_PL is intended to be used by the STA, e.g., during the contention period within this SP.

In another example, the announcing of the time period during which a STA is intended to use the AC_PL may provide a technical solution to support other STAs in a decision to avoid or reduce communications during this period, e.g., even if the AC_PL is assumed to be resistant to collisions.

In some demonstrative aspects, the high-priority (prioritized-access) contention policy to obtain the TxOP to transmit the high-priority data may be configured according to a setting of one or more parameters of a contention policy of the contention period during which the reservation (defer) signal has been transmitted, e.g., as described below.

In some demonstrative aspects, the high-priority (prioritized-access) contention policy to obtain the TxOP to transmit the high-priority data may be configured to be different from a contention policy of the contention period during which the reservation (defer) signal has been transmitted, e.g., as described below.

In some demonstrative aspects, the high-priority (prioritized-access) contention policy to obtain the TxOP to transmit the high-priority data may be configured to include an Enhanced Distributed Channel Access (EDCA) policy, e.g., as described below.

In other aspects, the high-priority (prioritized-access) contention policy to obtain the TxOP to transmit the high-priority data may be configured according to any other additional or alternative type of contention policy.

In some demonstrative aspects, the high-priority (prioritized-access) contention policy to obtain the TxOP to transmit the high-priority data may be configured to include a contention slot shorter than 10us, e.g., as described below.

In some demonstrative aspects, the high-priority (prioritized-access) contention policy to obtain the TxOP to transmit the high-priority data may be configured to include a contention slot shorter than 9us, e.g., as described below.

In other aspects, the high-priority (prioritized-access) contention policy to obtain the TxOP to transmit the high-priority data may be configured to include a contention slot of any other suitable duration.

In some demonstrative aspects, device 102, device 140, and/or device 160 may be configured to implement one or more operations and/or functionalities of a high-priority (prioritized-access) contention mechanism for transmission of high-priority traffic (also referred to as "prioritized-access traffic"), e.g., as describes below.

In some demonstrative aspects, the high-priority (prioritized-access) contention mechanism for transmission of high-priority (prioritized-access) traffic may define that a STA, e.g., a STA implemented by device 102, device 140 or device 160, that has data queued for a high-priority (prioritized-access) AC, e.g., the AC_PL, may be allowed to transmit a reservation (defer) signal, a fixed time after, e.g., immediately at a fixed time after, a start of a contention period.

In some demonstrative aspects, the fixed time may be defined based on an AIFSN corresponding to the high-priority (prioritized-access) AC.

In some demonstrative aspects, the fixed time may be defined using AIFSN=1. This setting of the AIFSN corresponding to the high-priority (prioritized-access) AC may be, for example, more aggressive than the AIFSN of the AC_VO, e.g., AIFSN=2.

In other aspects, the fixed time may be defined based on any other setting of the AIFSN, and/or based on any other parameter and/or criteria.

In some demonstrative aspects, the reservation (defer) signal may be configured, for example, to provide a technical solution to support receipt and/or detection of the reservation signal by one or more STAs, e.g., some or all STAs, which participate in the contention period, and which are not allowed to transmit a reservation signal. For example, the CCA of the STAs receiving the reservation (defer) signal may signal busy, and, accordingly, these STAs may defer access to the medium for a certain duration. For example, this certain duration may be based on a type of reservation (defer) signal defined for the AC_PL.

In some demonstrative aspects, the reservation (defer) signal may be configured, for example, to provide a technical solution to support a scenario where a plurality of STAs, which may have packets queued in their AC_PL, may be allowed to substantially simultaneously transmit the reservation signal.

For example, the reservation (defer) signal may be defined, for example, such that even in case a plurality of STAs transmit the reservation signal, e.g., substantially at a same time, the reservation signal may still result in a same impact on a 3rd party STA that receives all these overlapping reservation signals. For example, the reservation (defer) signal may be defined, for example, such that the overlapping reservation signals received by the 3rd party STA may still trigger the busy CCA at the 3rd party STA, for example, such that the 3rd party STA will defer and/or halt its EDCA process.

In some demonstrative aspects, the reservation (defer) signal may be configured as a very short signal, e.g., a 4us or 8us STF signal, for example, which may be sufficient to trigger CCA on 3rd party STAs.

For example, these 3rd party STA may have their CCA triggered, and may continue to process the reservation signal, for example, as if other fields, e.g., an L-LTF and an L-SIG, are present in the received signal, although this may not be the case.

For example, a 3rd party STA may fail the L-SIG reception, e.g., as it may not be present in the reservation signal. For example, this failure may cause the STA to abort packet reception based on the reservation signal. Accordingly, the 3rd party STA may wait for a predefined period, e.g., an Extended Interframe Space (EIFS), for example, before contending again for the wireless medium.

In some demonstrative aspects, the reservation (defer) signal may be defined to be longer, e.g., than the STF. For example, the reservation signal may be defined to include one or more fields, e.g., an L-LTF, and possibly an L-SIG, e.g., after the STF. For example, the reservation signal may include the L-SIG, for example, in case including the L-SIG may provide better results, e.g., in order to ensure that 3rd party STAs and/or legacy STAs will not discard and/or ignore the reservation signal.

In some demonstrative aspects, in case the reservation (defer) signal is configured to include an L-SIG, one or more fields of the L-SIG, e.g., a rate field and a length field and/or any other suitable field of the L-SIG, may be set according to a predefined setting, which may indicate a reservation signal transmission type, for example, according to a UHR Specification.

In some demonstrative aspects, one or more fields of the L-SIG of the reservation signal, e.g., the rate field and the length field, may be set to a predefined setting configured to signal to UHR STAs and/or other STAs that a transmission including the L-SIG is a reservation signal. For example, legacy STAs may defer access to the medium, for example, based on the L_length field in the L-SIG, for example, although the legacy STAs may not be able to identify that the transmission including the L-SIG is a reservation signal.

In some demonstrative aspects, the reservation (defer) signal may be configured to include only the L-STF and L-LTF fields, for example, to provide more signaling for legacy devices, for example, to ensure that the legacy devices defer access to the medium, for example, based on a perceived missed detect.

In some demonstrative aspects, the reservation (defer) signal may be configured to include a MAC frame, for example, to provide a technical solution to support reservation of the medium, for example, while using a frame as small as possible.

In some demonstrative aspects, the reservation (defer) signal may include a CTS frame.

In other aspects, the reservation (defer) signal may include any other MAC frame.

In some demonstrative aspects, one or more fields of MAC frame, e.g., in addition to the L-SIG, may be configured according to a predefined setting, for example, such that these fields may be substantially identical in all overlapping frames, which may be sent by all STAs with packets in the AC_PL queues.

In some demonstrative aspects, a setting may be defined for one or more fields of a MAC frame to be used as a reservation (defer) signal. For example, the setting may be defined with respect to a duration field, a Receive Address (RA) field, a Frame Control (FC) field, and/or any other additional or alternative field of a MAC frame to be used as a reservation signal.

In one example, one or more parameters in the fields of the reservation (defer) signal MAC frame may be pre-set in a Standard. For example, the Standard may define a predefined setting of parameters in one or more, e.g., some or all, fields of a MAC frame to be used as the reservation signal.

In another example, an AP, e.g., an AP implemented by device 102, may be configured to announce the setting of the one or more fields to be applied by one or more STAs for a MAC frame to be used as a reservation signal. For example, the AP may announce this setting in one or more management frames, e.g., as described below.

In some demonstrative aspects, a scrambling seed may be defined for a MAC frame, e.g., a CTS frame, to be used as a reservation signal.

In one example, the scrambling seed for a MAC frame, e.g., a CTS frame, to be used as a reservation signal may be pre-set in a Standard. For example, the Standard, e.g., an *IEEE 802.11 Specification* or any other Standard, may define a predefined setting of a scrambling seed to be applied for a MAC frame to be used as the reservation signal.

In another example, an AP, e.g., an AP implemented by device 102, may be configured announce the setting of the scrambling seed to be applied by one or more STAs, e.g., a STA implemented by device 140, for a MAC frame to be used as a reservation signal. For example, the AP e.g., the AP implemented by device 102, may be configured to announce this scrambling seed setting in one or more management frames.

In some demonstrative aspects, the setting of the fields and/or the scrambling seed of the MAC frame, e.g., the CTS, to be used as a reservation signal may be configured to provide a technical solution to support STAs in configuring the MAC frame, for example, such that, in case multiple STAs transmit the reservation signal substantially simultaneously, overlapping reservation signals received by a 3^{rd} party STA may still trigger a busy CCA at the 3^{rd} party STA.

In some demonstrative aspects, it may be defined by a high-priority (prioritized-access) contention mechanism that, for example, once at least one reservation (defer) signal is sent during a contention period, one or more STAs, e.g., only STAs that sent a reservation signal, may be the only ones that can still decrement a backoff and contend for the wireless medium.

In some demonstrative aspects, it may be defined by the high-priority (prioritized-access) contention mechanism that the STAs, which have sent the reservation (defer) signal, may use backoff parameters for the AC_PL, for example, in a same way as other ACs, e.g., AC_VI, AC_VO, or the like.

In one example, it may be defined by the high-priority (prioritized-access) contention mechanism that the STAs, which have sent the reservation signal, may be allowed to use a larger Contention Window (CW), e.g., a larger maximal CW (CWmax), for example, to provide a technical solution to tolerate a larger number of STAs.

In another example, it may be defined by the high-priority(prioritized-access) contention mechanism that the STAs, which have sent the reservation (defer) signal, may use a single CW, which may be, for example, scaled dynamically, e.g., through signaling by an AP, for example, an AP implemented by device 102. For example, the single CW may be set so that the amount of collisions is bounded. Accordingly, a size of the single CW may be relatively small.

In some demonstrative aspects, it may be defined by the high-priority (prioritized-access) contention mechanism that the STAs, which have sent the reservation (defer) signal, may use a shortened contention slot, for example, as only STAs with high-priority (prioritized-access) AC traffic, e.g., only UHR STAs, may be allowed to contend the wireless medium after transmission of the reservation (defer) signal.

For example, it may be defined by the high-priority (prioritized-access) contention mechanism that the STAs, which have sent the reservation signal, may use a contention slot shorter than 9us. For example, the duration of the contention slot may be decreased below 9us, for example, to converge more quickly, for example, as technology evolves.

In some demonstrative aspects, device 102, device 140, and/or device 160 may be configured to implement one or more operations and/or functionalities of a prioritized-access contention mechanism, which may be configured to provide a technical solution to support an AP in regulating if and/or how one or more STAs, e.g., some or all of the STAs associated with the AP, should or shouldn't use the prioritized-access mechanism, e.g., as described below.

In some demonstrative aspects, the high-priority (prioritized-access) contention policy may be configured to provide a technical solution to support an AP in regulating if and/or how one or more STAs, e.g., some or all of the STAs associated with the AP, should or shouldn't be allowed to send reservation (defer) signals within a contention period, for example, an EDCA contention period, e.g., as described below.

In some demonstrative aspects, it may be defined by a high-priority (prioritized-access) contention mechanism that an AP may be allowed to selectively enable and/or disable usage of the prioritized-access mechanism by one or more STAs, e.g., STAs associated with the AP, for example, STAs in a BSS of the AP, e.g., as described below.

In some demonstrative aspects, it may be defined by a high-priority (prioritized-access) contention mechanism that an AP may be allowed to selectively enable and/or disable usage of the reservation (defer) signal, by one or more STAs, e.g., STAs associated with the AP, for example, STAs in a BSS of the AP, e.g., as described below.

In some demonstrative aspects, device 102, device 140, and/or device 160 may be configured to implement one or more operations and/or functionalities of a prioritized-access contention mechanism, which may be configured to provide a technical solution to support an AP in protecting STAs in a BSS of the AP, for example, against an effect, e.g., a side-effect, of reservation (defer) signals from STAs in another BSS, e.g., an Overlapping BSS (OBSS), of another AP, e.g., as described below.

For example, a first BSS of a first AP may have some overlap with a second BSS of a second AP. For example, one or more STAs in the second BSS transmit a reservation (defer) signal as part of a prioritized-access contention for the second BSS. For example, in some cases, one or more STAs of the first BSS may be able to detect the defer signals transmitted by the STAs in the second BSS. As a result, these one or more STAs of the first BSS may select to defer transmissions, e.g., based on the defer signals from the second BSS.

In some demonstrative aspects, it may be defined by a high-priority (prioritized-access) contention mechanism that an AP may be allowed to request from another AP, e.g., an AP of an OBSS, to selectively instruct its associated STAs to refrain from transmitting reservation (defer) signals, e.g., as described below.

In some demonstrative aspects, controller 124 may be configured to control, trigger, cause, and/or instruct an AP implemented by device 102 to set a prioritized-access enabled/disabled field to indicate, for example, whether a prioritized-access contention mechanism is to be enabled or disabled over a wireless medium, e.g., as described below.

In some demonstrative aspects, the prioritized-access contention mechanism may be configured to allow a prioritized STA to transmit a reservation (defer) signal over the wireless medium at a reservation signal transmission time, e.g., as described above.

In some demonstrative aspects, the prioritized-access contention mechanism may be configured to allow the prioritized STA to contend the wireless medium, for example, according to a high-priority contention policy to obtain a TxOP after transmission of the reservation (defer) signal, e.g., as described above.

In some demonstrative aspects, the reservation (defer) signal transmission time may be based, for example, on an end of a predefined time duration from a start of a contention period, e.g., as described above.

In some demonstrative aspects, the reservation (defer) signal is to indicate a busy Clear Channel Assessment (CCA) to a receiving STA, e.g., as described above.

In some demonstrative aspects, controller 124 may be configured to control, trigger, cause, and/or instruct the AP implemented by device 102 to transmit a frame including the prioritized-access enabled/disabled field over the wireless medium, e.g., as described below.

In some demonstrative aspects, the prioritized-access enabled/disabled field may be configured to include a single bit field, e.g., as described below. In other aspects, the prioritized-access enabled/disabled field may be configured to include more than one bit.

In some demonstrative aspects, the AP implemented by device 102 may include a UHR AP, e.g., as described above. In other aspects, the AP implemented by device 102 may include any other type of AP.

In some demonstrative aspects, the frame including the prioritized-access enabled/disabled field may include a management frame, e.g., as described below.

In some demonstrative aspects, the frame including the prioritized-access enabled/disabled field may include a beacon frame, e.g., as described below.

In other aspects, the frame including the prioritized-access enabled/disabled field may include any other type of frame.

In some demonstrative aspects, controller 124 may be configured to control, trigger, cause, and/or instruct the AP implemented by device 102 to set the prioritized-access enabled/disabled field to a predefined prioritized-access-enabled value, for example, based on a determination that the prioritized-access contention mechanism is to be enabled for use by one or more STAs, for example, one or more STAs associated with the AP e.g., as described below.

In some demonstrative aspects, controller 124 may be configured to control, trigger, cause, and/or instruct the AP implemented by device 102 to set the prioritized-access enabled/disabled field to the predefined prioritized-access-enabled value, for example, based on a determination that the prioritized-access contention mechanism is to be enabled for use in a BSS of the AP, e.g., as described below.

In some demonstrative aspects, the predefined prioritized-access-enabled value may be one. In other aspects, any other predefined prioritized-access-enabled value may be implemented.

In some demonstrative aspects, controller 124 may be configured to control, trigger, cause, and/or instruct the AP implemented by device 102 to set the prioritized-access enabled/disabled field to a predefined prioritized-access-disabled value, for example, based on determination that the prioritized-access contention mechanism is to be disabled for use by one or more STAs, for example, one or more STAs associated with the AP e.g., as described below.

In some demonstrative aspects, controller 124 may be configured to control, trigger, cause, and/or instruct the AP implemented by device 102 to set the prioritized-access enabled/disabled field to the predefined prioritized-access-disabled value, for example, based on determination that the prioritized-access contention mechanism is to be disabled for use in the BSS of the AP, e.g., as described below.

In some demonstrative aspects, the predefined prioritized-access-disabled value may be zero. In other aspects, any other predefined prioritized-access-disabled value may be implemented.

In some demonstrative aspects, controller 124 may be configured to control, trigger, cause, and/or instruct the AP implemented by device 102 to set the prioritized-access enabled/disabled field, for example, according to a prioritized-access enabled/disabled element format, e.g., as described below.

In some demonstrative aspects, the prioritized-access enabled/disabled element format may be configured to support a plurality of prioritized-access enabled/disabled fields, e.g., as described below.

In some demonstrative aspects, the plurality of prioritized-access enabled/disabled fields may correspond to a plurality of prioritized-access rules, e.g., as described below.

In some demonstrative aspects, controller 124 may be configured to control, trigger, cause, and/or instruct the AP implemented by device 102 to set the prioritized-access enabled/disabled field, for example, by setting an identified prioritized-access enabled/disabled field in a prioritized-access enabled/disabled element format including a plurality of prioritized-access enabled/disabled fields corresponding to a plurality of prioritized-access rules, e.g., as described below.

In some demonstrative aspects, the prioritized-access enabled/disabled element format may be configured to support a variable number of prioritized-access enabled/disabled fields, e.g., as described below.

For example, the prioritized-access enabled/disabled element format may be configured to support a variable number of prioritized-access enabled/disabled fields, for example, to provide a technical solution to support an AP in signaling enabled/disabled instructions with respect to a variable number of use cases and/or plurality of prioritized-access rules, e.g., as described below.

In some demonstrative aspects, controller 124 may be configured to control, trigger, cause, and/or instruct the AP implemented by device 102 to set prioritized-access rule information in the frame, e.g., as described below.

In some demonstrative aspects, the prioritized-access rule information may be configured to indicate, for example, one or more prioritized-access rules to define the prioritized STA to be allowed to use the prioritized-access contention mechanism, e.g., as described below.

In some demonstrative aspects, controller 124 may be configured to control, trigger, cause, and/or instruct the AP implemented by device 102 to set a plurality of prioritized-access enabled/disabled field in the frame, e.g., as described below.

In some demonstrative aspects, controller 124 may be configured to control, trigger, cause, and/or instruct the AP implemented by device 102 to set a first prioritized-access enabled/disabled field in the frame, for example, to indicate whether the prioritized-access contention mechanism is to be enabled or disabled for channel access according to a first prioritized-access rule, e.g., as described below.

In some demonstrative aspects, controller 124 may be configured to control, trigger, cause, and/or instruct the AP implemented by device 102 to set a second prioritized-access enabled/disabled field in the frame, for example, to indicate whether the prioritized-access contention mechanism is to be enabled or disabled for channel access according to a second prioritized-access rule, e.g., as described below.

In some demonstrative aspects, the second prioritized-access rule may be different from the first prioritized-access rule, e.g., as described below.

In some demonstrative aspects, the first prioritized-access rule may be based, for example, on a traffic type, e.g., as described below.

In some demonstrative aspects, the first prioritized-access rule may be configured, for example, to define whether a STA is to be defined as a prioritized STA, for example, based on a traffic type of traffic to be communicated by the STA, e.g., as described above.

In some demonstrative aspects, the first prioritized-access rule may be configured, for example, to define whether a STA is to be defined as a prioritized STA, for example, based on whether or not the STA has traffic of the prioritized-access AC for transmission, e.g., as described above.

In some demonstrative aspects, the second prioritized-access rule may be based, for example, on a count of failed retransmissions, e.g., as described below.

In some demonstrative aspects, the second prioritized-access rule may be configured, for example, to define whether a STA is to be defined as a prioritized STA, for example, based on a number of failed retransmissions performed by the STA, e.g., as described above.

In other aspects, the first prioritized-access rule and/or the second prioritized-access rule may include any other additional or alternative rule, which may be based on any other additional or alternative parameter, attribute, condition and/or criteria.

In some demonstrative aspects, controller 124 may be configured to control, trigger, cause, and/or instruct the AP implemented by device 102 to set prioritized-access rule information in the frame including the plurality of prioritized-access enabled/disabled fields, e.g., as described below.

In some demonstrative aspects, the prioritized-access rule information may be configured, for example, to indicate the first prioritized-access rule and/or the second prioritized-access rule, e.g., as described below.

In some demonstrative aspects, controller 124 may be configured to control, trigger, cause, and/or instruct the AP implemented by device 102 to set the prioritized-access enabled/disabled field based, for example, on a determination whether the prioritized-access contention mechanism is to be enabled or disabled for use by one or more STAs, for example, one or more STAs associated with the AP, e.g., as described below.

In some demonstrative aspects, controller 124 may be configured to control, trigger, cause, and/or instruct the AP implemented by device 102 to set the prioritized-access enabled/disabled field, for example, based on a determination whether the prioritized-access contention mechanism is to be enabled or disabled for use in the BSS of the AP, e.g., as described below.

In some demonstrative aspects, controller 124 may be configured to control, trigger, cause, and/or instruct the AP implemented by device 102 to request another AP to disable use of the prioritized-access contention mechanism, e.g., as described below.

In some demonstrative aspects, controller 124 may be configured to control, trigger, cause, and/or instruct the AP implemented by device 102 to request another AP to disable use of the reservation (defer) signal, e.g., as described below.

In some demonstrative aspects, controller 124 may be configured to control, trigger, cause, and/or instruct the AP implemented by device 102 to set a prioritized-access disable request field in a frame, for example, to indicate a request from other APs to disable use of the prioritized-access contention mechanism, e.g., as described below.

In some demonstrative aspects, controller 124 may be configured to control, trigger, cause, and/or instruct the AP implemented by device 102 to set the prioritized-access disable request field and the prioritized-access enabled/disabled field in a same frame, for example, a same beacon frame.

In some demonstrative aspects, controller 124 may be configured to control, trigger, cause, and/or instruct the AP implemented by device 102 to set the prioritized-access disable request field in a first frame, for example, a first management frame, e.g., a first beacon frame or any other first frame, and to set the prioritized-access enabled/disabled field in a second frame, for example, a second management frame, e.g., a second beacon frame or any other second frame.

In some demonstrative aspects, controller 124 may be configured to control, trigger, cause, and/or instruct the AP implemented by device 102 to request another AP to disable use of the reservation (defer) signal, for example, during one or more time periods, e.g., as described below.

In some demonstrative aspects, controller 124 may be configured to control, trigger, cause, and/or instruct the AP implemented by device 102 to request another AP to disable use of the reservation (defer) signal, for example, during one or more Service Periods (SPs), e.g., as described below.

In other aspects, controller 124 may be configured to control, trigger, cause, and/or instruct the AP implemented by device 102 to request another AP to disable use of the reservation (defer) signal, for example, during one or more other additional or alternative time periods.

In some demonstrative aspects, controller 124 may be configured to control, trigger, cause, and/or instruct the AP implemented by device 102 to set protected SP information in the frame to indicate one or more protected SPs of the AP, for example, during which other APs are to disable the prioritized-access contention mechanism, e.g., as described below.

In some demonstrative aspects, controller 124 may be configured to control, trigger, cause, and/or instruct the AP implemented by device 102 to set protected SP information in the frame to indicate one or more protected SPs of the AP, for example, during which other APs are to disable the use of reservation (defer) signals, e.g., as described below.

In some demonstrative aspects, controller 124 may be configured to control, trigger, cause, and/or instruct the AP implemented by device 102 to limit a use of the protected SPs, for example, based on at least one predefined protected SP limitation, e.g., as described below.

In some demonstrative aspects, controller 124 may be configured to control, trigger, cause, and/or instruct the AP implemented by device 102 to limit a periodicity of the protected SPs, for example, based on at least one predefined protected SP limitation, e.g., as described below.

In some demonstrative aspects, controller 124 may be configured to control, trigger, cause, and/or instruct the AP implemented by device 102 to limit a duration of the protected SPs, for example, based on at least one predefined protected SP limitation, e.g., as described below.

In some demonstrative aspects, controller 124 may be configured to control, trigger, cause, and/or instruct the AP implemented by device 102 to limit a count of the protected SPs, for example, based on at least one predefined protected SP limitation, e.g., as described below.

In some demonstrative aspects, controller 124 may be configured to control, trigger, cause, and/or instruct the AP implemented by device 102 to set the prioritized-access enabled/disabled field, for example, based on a request from another AP, e.g., as described below.

In some demonstrative aspects, controller 124 may be configured to control, trigger, cause, and/or instruct the AP implemented by device 102 to set the prioritized-access enabled/disabled field to indicate that the prioritized-access contention mechanism is to be disabled, e.g., for use by one or more STAs in the BSS of the AP, for example, based on a determination that a prioritized-access disable request field in a received frame from another AP is set to indicate a request to disable use of the prioritized-access contention mechanism, e.g., as described below.

For example, controller 124 may be configured to control, trigger, cause, and/or instruct the AP implemented by device 102 identify that a prioritized-access disable request field in a received frame from another AP, e.g., an AP implemented by device 160, is set to indicate a request to disable use of the prioritized-access contention mechanism.

For example, controller 124 may be configured to control, trigger, cause, and/or instruct the AP implemented by device 102 to set the prioritized-access enabled/disabled field to indicate that the prioritized-access contention mechanism is to be disabled for use by STAs in the BAS of the AP, for example, based on the determination that the prioritized-access disable request field from the AP implemented by device 160 is set to indicate the request from the AP implemented by device 160 to disable use of the prioritized-access contention mechanism.

In some demonstrative aspects, controller 124 may be configured to control, trigger, cause, and/or instruct the AP implemented by device 102 to identify a protected SP of another AP, for example, based on a frame from the other AP.

For example, controller 124 may be configured to control, trigger, cause, and/or instruct the AP implemented by device 102 to identify a protected SP of the AP implemented by device 160, for example, based on a frame from the AP implemented by device 160.

In some demonstrative aspects, controller 124 may be configured to control, trigger, cause, and/or instruct the AP implemented by device 102 to set the prioritized-access enabled/disabled field to indicate that the prioritized-access contention mechanism is to be disabled for use, e.g., by one or more STAs in the BSS of the AP, for example, during the protected SP of the other AP, e.g., as described below.

In some demonstrative aspects, controller 124 may be configured to control, trigger, cause, and/or instruct the AP implemented by device 102 to set the prioritized-access enabled/disabled field with respect to a prioritized-access contention mechanism defining that the reservation signal transmission time is immediately at the end of the predefined time duration from the start of the contention period, e.g., as described above.

In some demonstrative aspects, controller 124 may be configured to control, trigger, cause, and/or instruct the AP implemented by device 102 to set the prioritized-access enabled/disabled field with respect to a prioritized-access contention mechanism defining that the reservation signal include a preset reservation signal having a preset format and content, e.g., as described above.

In some demonstrative aspects, controller 124 may be configured to control, trigger, cause, and/or instruct the AP implemented by device 102 to set the prioritized-access enabled/disabled field with respect to a prioritized-access contention mechanism defining that the reservation signal includes a preset reservation sequence, e.g., as described above.

In some demonstrative aspects, controller 124 may be configured to control, trigger, cause, and/or instruct the AP implemented by device 102 to set the prioritized-access enabled/disabled field with respect to a prioritized-access contention mechanism defining that the reservation signal includes an STF signal, e.g., as described above.

In some demonstrative aspects, controller 124 may be configured to control, trigger, cause, and/or instruct the AP implemented by device 102 to set the prioritized-access enabled/disabled field with respect to a prioritized-access contention mechanism defining that the reservation signal includes an LTF signal following the STF signal, e.g., as described above.

In some demonstrative aspects, controller 124 may be configured to control, trigger, cause, and/or instruct the AP implemented by device 102 to set the prioritized-access enabled/disabled field with respect to a prioritized-access contention mechanism defining that the reservation signal include a MAC frame, e.g., as described above.

In some demonstrative aspects, controller 124 may be configured to control, trigger, cause, and/or instruct the AP implemented by device 102 to set the prioritized-access enabled/disabled field with respect to a prioritized-access contention mechanism defining that the MAC frame include a CTS frame, e.g., as described above.

In some demonstrative aspects, controller 124 may be configured to control, trigger, cause, and/or instruct the AP implemented by device 102 to set the prioritized-access enabled/disabled field with respect to a prioritized-access contention mechanism defining that the MAC frame is scrambled according to a preset scrambling seed defined for high-priority reservation signaling, e.g., as described above.

In some demonstrative aspects, controller 124 may be configured to control, trigger, cause, and/or instruct the AP implemented by device 102 to set the prioritized-access enabled/disabled field with respect to a prioritized-access contention mechanism defining that the reservation signal has a duration of less than 10us, e.g., as described above.

In some demonstrative aspects, controller 124 may be configured to control, trigger, cause, and/or instruct the AP implemented by device 102 to set the prioritized-access enabled/disabled field with respect to a prioritized-access contention mechanism defining that the reservation signal has a duration of 8us or less, e.g., as described above.

In some demonstrative aspects, controller 124 may be configured to control, trigger, cause, and/or instruct the AP implemented by device 102 to set the prioritized-access enabled/disabled field with respect to a prioritized-access contention mechanism defining that the reservation signal has a duration of 4us or less, e.g., as described above.

In some demonstrative aspects, controller 124 may be configured to control, trigger, cause, and/or instruct the AP implemented by device 102 to set the prioritized-access enabled/disabled field with respect to a prioritized-access contention mechanism defining that the predefined time duration is based on an AIFS corresponding to a high-priority AC, e.g., as described above.

In some demonstrative aspects, the AIFS corresponding to the high-priority AC may be based on an AIFSN corresponding to the high-priority AC, e.g., as described above.

In some demonstrative aspects, the AIFSN corresponding to the high-priority AC may be a lowest AIFSN defined by a contention policy of the contention period, e.g., as described above.

In some demonstrative aspects, the AIFSN corresponding to the high-priority AC may be less than an AIFSN for a Voice AC (AC_VO), e.g., as described above.

In some demonstrative aspects, controller 124 may be configured to control, trigger, cause, and/or instruct the AP implemented by device 102 to set the prioritized-access enabled/disabled field with respect to a prioritized-access contention mechanism defining that the AIFSN corresponding to the high-priority AC is equal to 1, e.g., as described above.

In some demonstrative aspects, controller 124 may be configured to control, trigger, cause, and/or instruct the AP implemented by device 102 to set the prioritized-access enabled/disabled field with respect to a prioritized-access contention mechanism defining that the high-priority contention policy is configured according to a setting of one or more parameters of a contention policy of the contention period, e.g., as described above.

In some demonstrative aspects, controller 124 may be configured to control, trigger, cause, and/or instruct the AP implemented by device 102 to set the prioritized-access enabled/disabled field with respect to a prioritized-access contention mechanism defining that the high-priority contention policy is different from a contention policy of the contention period, e.g., as described above.

In some demonstrative aspects, controller 124 may be configured to control, trigger, cause, and/or instruct the AP implemented by device 102 to set the prioritized-access enabled/disabled field with respect to a prioritized-access contention mechanism defining that the high-priority contention policy includes an EDCA policy, e.g., as described above.

In some demonstrative aspects, controller 124 may be configured to control, trigger, cause, and/or instruct the AP implemented by device 102 to set the prioritized-access enabled/disabled field with respect to a prioritized-access contention mechanism defining that the high-priority contention policy include a contention slot shorter than 9usec, e.g., as described above.

In some demonstrative aspects, controller 124 may be configured to control, trigger, cause, and/or instruct the AP implemented by device 102 to set the prioritized-access enabled/disabled field with respect to a prioritized-access contention mechanism configured according to any other additional or alternative definition.

In some demonstrative aspects, controller 154 may be configured to control, trigger, cause, and/or instruct a non-AP STA implemented by device 140 to process a prioritized-access enabled/disabled field in a frame from an AP, for example, to identify whether a prioritized-access contention mechanism is to be enabled or disabled over a wireless medium, e.g., as described below.

In some demonstrative aspects, the non-AP STA implemented by device 140 may include a UHR non-AP STA, e.g., as described above. In other aspects, the non-AP STA implemented by device 140 may include any other type of non-AP STA.

In some demonstrative aspects, the prioritized-access enabled/disabled field may be configured to include a single bit field, e.g., as described below. In other aspects, the prioritized-access enabled/disabled field may be configured to include more than one bit.

In some demonstrative aspects, the frame including the prioritized-access enabled/disabled field may include a management frame, e.g., as described below.

In some demonstrative aspects, the frame including the prioritized-access enabled/disabled field may include a beacon frame, e.g., as described below.

In other aspects, the frame including the prioritized-access enabled/disabled field may include any other type of frame.

In some demonstrative aspects, for example, the frame received by the non-AP STA implemented by device 140 may include the frame transmitted from the AP implemented by device 102, e.g., as described above.

In some demonstrative aspects, controller 154 may be configured to control, trigger, cause, and/or instruct the non-AP STA implemented by device 140 to allow the non-AP STA to use the prioritized-access contention mechanism, for example, based on a determination that the prioritized-access contention mechanism is to be enabled, e.g., as described below.

In some demonstrative aspects, controller 154 may be configured to control, trigger, cause, and/or instruct the non-AP STA implemented by device 140 to allow the non-AP STA to use the prioritized-access contention mechanism as a prioritized STA, for example, to transmit a reservation (defer) signal over the wireless medium at a reservation signal transmission time, and to contend the wireless medium according to a high-priority contention policy to obtain a TxOP after transmission of the reservation signal, e.g., as described below.

In some demonstrative aspects, the reservation (defer) signal transmission time may be based on an end of a predefined time duration from a start of a contention period, e.g., as described above.

In some demonstrative aspects, the reservation (defer) signal may be configured to indicate a busy CCA to a receiving STA, e.g., as described above.

In some demonstrative aspects, controller 154 may be configured to control, trigger, cause, and/or instruct the non-AP STA implemented by device 140 to identify that the prioritized-access contention mechanism is to be enabled for use by one or more STAs, for example, one or more STAs associated with the AP, for example, based on a determination that the prioritized-access enabled/disabled field includes a predefined prioritized-access-enabled value, e.g., as described below.

In some demonstrative aspects, controller 154 may be configured to control, trigger, cause, and/or instruct the non-AP STA implemented by device 140 to identify that the prioritized-access contention mechanism is to be enabled for use in a BSS of the AP, for example, based on a determination that the prioritized-access enabled/disabled field includes the predefined prioritized-access-enabled value, e.g., as described below.

In some demonstrative aspects, the predefined prioritized-access-enabled value may be one, e.g., as described above. In other aspects, any other predefined prioritized-access-enabled value may be used.

In some demonstrative aspects, controller 154 may be configured to control, trigger, cause, and/or instruct the non-AP STA implemented by device 140 to identify that the prioritized-access contention mechanism is to be disabled for use by one or more STAs, for example, one or more STAs associated with the AP, for example, based on a determination that the prioritized-access enabled/disabled field includes a predefined prioritized-access-disabled value, e.g., as described below.

In some demonstrative aspects, controller 154 may be configured to control, trigger, cause, and/or instruct the non-AP STA implemented by device 140 to identify that the prioritized-access contention mechanism is to be disabled for use in the BSS of the AP, for example, based on a determination that the prioritized-access enabled/disabled field includes the predefined prioritized-access-disabled value, e.g., as described below.

In some demonstrative aspects, the predefined prioritized-access-disabled value may be zero, e.g., as described above. In other aspects, any other predefined prioritized-access-disabled value may be used.

In some demonstrative aspects, controller 154 may be configured to control, trigger, cause, and/or instruct the non-AP STA implemented by device 140 to identify the prioritized-access enabled/disabled field in a prioritized-access enabled/disabled element format including a plurality of prioritized-access enabled/disabled fields, e.g., as described below.

In some demonstrative aspects, plurality of prioritized-access enabled/disabled fields may correspond to a plurality of prioritized-access rules and/or use cases, e.g., as described below.

In some demonstrative aspects, controller 154 may be configured to control, trigger, cause, and/or instruct the non-AP STA implemented by device 140 to use the prioritized-access contention mechanism as the prioritized STA, for example, based on a prioritized-access rule corresponding to the prioritized-access enabled/disabled field, e.g., as described below.

In some demonstrative aspects, controller 154 may be configured to control, trigger, cause, and/or instruct the non-AP STA implemented by device 140 to process prioritized-access rule information in the frame from the AP, e.g., as described below.

In some demonstrative aspects, controller 154 may be configured to control, trigger, cause, and/or instruct the non-AP STA implemented by device 140 to identify, for example, based on the prioritized-access rule information, one or more prioritized-access rules to define the prioritized STA to be allowed to use the prioritized-access contention mechanism, e.g., as described below.

In some demonstrative aspects, controller 154 may be configured to control, trigger, cause, and/or instruct the non-AP STA implemented by device 140 to process a plurality of prioritized-access enabled/disabled fields in the frame from the AP, for example, to identify whether the prioritized-access contention mechanism is to be enabled or disabled for channel access according to a plurality of prioritized-access rules, e.g., as described below.

In some demonstrative aspects, controller 154 may be configured to control, trigger, cause, and/or instruct the non-AP STA implemented by device 140 to process a first prioritized-access enabled/disabled field in the frame from the AP, for example, to identify whether the prioritized-access contention mechanism is to be enabled or disabled for channel access according to a first prioritized-access rule, e.g., as described below.

In some demonstrative aspects, controller 154 may be configured to control, trigger, cause, and/or instruct the non-AP STA implemented by device 140 to process a second prioritized-access enabled/disabled field in the frame, for example, to identify whether the prioritized-access contention mechanism is to be enabled or disabled for channel access according to a second prioritized-access rule, e.g., as described below.

In some demonstrative aspects, the second prioritized-access rule may be different from the first prioritized-access rule.

In some demonstrative aspects, the first prioritized-access rule may be based, for example, on a traffic type, e.g., as described above.

In some demonstrative aspects, the second prioritized-access rule may be based, for example, on a count of failed retransmissions, e.g., as described above.

In some demonstrative aspects, the plurality of prioritized-access enabled/disabled fields may correspond to any other additional or alternative prioritized-access rule and/or use case, e.g., as described above.

In some demonstrative aspects, controller 154 may be configured to control, trigger, cause, and/or instruct the non-AP STA implemented by device 140 to process prioritized-access rule information in the frame from the AP, for example, to identify the first prioritized-access rule and/or the second prioritized-access rule.

In some demonstrative aspects, device 102, device 140, and/or device 160 may be configured to implement one or more operations and/or functionalities of a prioritized-access mechanism, e.g., as described below.

In some demonstrative aspects, the prioritized-access mechanism may be configured to define that an AP, e.g., the AP implemented by device 102, may be allowed to selectively disable and/or enable the usage of the prioritized-access mechanism with the defer signal, for example, by one or more, e.g., some or all STAs associated with the AP.

In some demonstrative aspects, the prioritized-access mechanism may be configured to define that a frame of the AP, e.g., a beacon frame or any other frame, may include an enable/disable field, which may be utilized to indicate whether the use of the prioritized-access mechanism and/or defer signal is enabled ("Defer Signal allowed"), or disabled ("Defer Signal Disallowed").

In some demonstrative aspects, the enable/disable field may be included in an Operation element of the frame, e.g., in a UHR Operation element, and/or any other element.

In some demonstrative aspects, the prioritized-access mechanism may be configured to define that an AP, e.g., the AP implemented by device 102, may be allowed to condition the usage of defer signal by one or more STAs, e.g., by all STAs and/or by some STAs, for example, based on one or more conditions and/or criteria.

In some demonstrative aspects, the prioritized-access mechanism may be configured to define that an AP, e.g., the AP implemented by device 102, may be allowed to condition the usage of defer signal by one or more STAs, e.g., by all STAs and/or by some STAs, for example, based on one or more rules, applications, and/or use cases.

In some demonstrative aspects, the prioritized-access mechanism may be configured to define that an AP, e.g., the AP implemented by device 102, may be allowed to condition the usage of defer signal by one or more STAs, e.g., by all STAs and/or by some STAs, for example, to restrict the use of the defer signal only for specific rules, applications, and/or use cases.

For example, a plurality of use cases and/or sets of rules, e.g., two or more use cases and/or 2 two or more sets of rules, may be defined for the usage of the defer signal.

In one example, a STA may be allowed to use the defer signal in a first use case, for example, for traffic of one or more specific low latency applications.

For example, a first prioritized-access rule may define that a STA may be allowed to use the defer signal, for example, for a specific type of traffic, e.g., low latency traffic, for example, even without any retransmissions.

For example, the first prioritized-access rule may define that a STA may be allowed to use the defer signal, for example, only for the low latency traffic, for example, during a specific restricted Target Wake Time (TWT) (rTWT) and/or one or more TWT SPs, for example, even without the need to wait for retransmissions, e.g., as described above.

In another example, a STA may be allowed to use the defer signal in a second use case, for example, to reduce, e.g., cut, a latency tail.

For example, a second prioritized-access rule may define that a STA may be allowed to use the defer signal, for example, after a certain amount of retransmissions, e.g., as described above.

In some demonstrative aspects, the prioritized-access mechanism may be configured to define that an AP, e.g., the AP implemented by device 102, may be allowed to selectively enable/disable one or more, e.g., each, of the set of rules, for example, for a particular use case.

In some demonstrative aspects, an element in a frame, e.g., a prioritized-access element, may be configured to support a plurality of enable/disable fields, which may correspond to a plurality of respective prioritized-access rules and/or use cases, e.g., as described below.

In some demonstrative aspects, the prioritized-access element may be configured to support multiple enable/disable fields, e.g., one enable/disable field for each set of rules, for example, to allow the AP to enable/disable the set of rules, e.g., as described below.

In some demonstrative aspects, the prioritized-access element may be configured to support a variable number of enable/disable fields.

For example, the prioritized-access element may be configured to support one or more additional, e.g., new, enable/disable fields, for example, to support one or more additional, e.g., new, sets of rules, for example, in addition to, or instead of, the first and/or second prioritized-access rules described above.

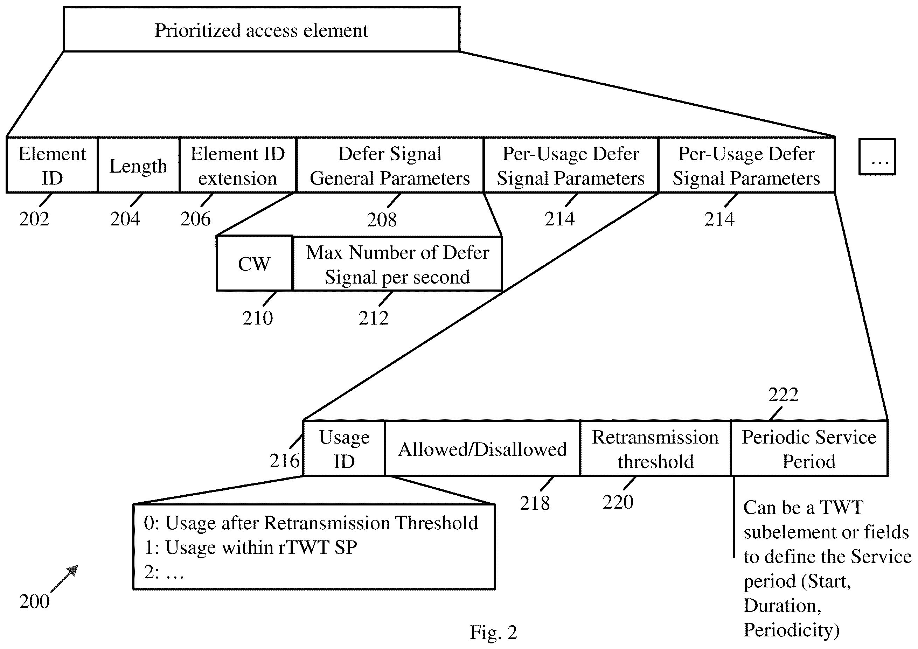

Reference is made to Fig. 2, which schematically illustrates a prioritized-access element 200, in accordance with some demonstrative aspects.

For example, an AP, e.g., an AP implemented by device 102 (Fig. 1), may be configured to generate and/or transmit a frame including prioritized-access element 200, e.g., as described above.

For example, a non-AP STA, e.g., a non-AP STA implemented by device 140 (Fig. 1), may be configured to receive and/or process a frame including prioritized-access element 200, e.g., as described above.

In some demonstrative aspects, prioritized-access element 200 may be included in a management frame.

In some demonstrative aspects, prioritized-access element 200 may be included in a beacon frame.

In some demonstrative aspects, prioritized-access element 200 may be included in any other additional or alternative type of frame.

In some demonstrative aspects, prioritized-access element 200 may be included as part of an operation element, for example, a UHR operation element.

In some demonstrative aspects, prioritized-access element 200 may be included as part of any other additional or alternative type of element and/or field.

In some demonstrative aspects, as shown in Fig. 2, prioritized-access element 200 may include an element identifier (ID) field 202. For example, element ID field 204 may be set to a predefined value to indicate the prioritized-access element 200.

In some demonstrative aspects, as shown in Fig. 2, prioritized-access element 200 may include a length field 204, for example, after the element ID field 202.

For example, length field 204 may be set to indicate a length of the prioritized-access element 200.

In one example, length field 204 may be set based on a count of per-usage parameter fields to be included in the prioritized-access element 200, e.g., as descried below.

In some demonstrative aspects, as shown in Fig. 2, prioritized-access element 200 may include an element ID extension field 206, for example, after the length field 204. For example, element ID extension field 206 may be set to a predefined value to indicate the prioritized-access element 200.

In some demonstrative aspects, as shown in Fig. 2, prioritized-access element 200 may include a prioritized-access parameter field (also referred to as "Defer Signal General Parameters field") 208, for example, after the element ID extension field 206.

In some demonstrative aspects, the prioritized-access parameter field 208 may be set by an AP, e.g., the AP implemented by device 102 (Fig. 1), to indicate one or more parameters to configure a prioritized-access contention mechanism.

In some demonstrative aspects, as shown in Fig. 2, the prioritized-access parameter field 208 may include a CW field 210, which may be set, for example, to indicate a CW to be implemented by the prioritized-access contention mechanism.

For example, CW field 210 may be set by an AP, e.g., the AP implemented by device 102 (Fig. 1), to indicate the CW to be used by the high-priority contention policy according to the prioritized-access contention mechanism, e.g., as described above.

For example, CW field 210 may be set by an AP, e.g., the AP implemented by device 102 (Fig. 1), to indicate the CW to be used by a prioritized STA to contend the medium for obtaining a TxOP, for example, after transmission of a defer signal, e.g., as described above.

In some demonstrative aspects, as shown in Fig. 2, the prioritized-access parameter field 208 may include a maximal rate ("Max number of Defer Signal per Second") field 212, which may be set, for example, to indicate a maximal rate of defer signals allowed to be transmitted by a STA.

In other aspects, the prioritized-access parameter field 208 may include any other additional or alternative fields, which may be configured to indicate one or more parameters, e.g., general parameters, to be defined with respect to the prioritized-access contention mechanism.

In some demonstrative aspects, as shown in Fig. 2, prioritized-access element 200 may include one or more usage-specific prioritized-access parameter fields (also referred to as "Per-Usage Defer Signal Parameters field") 214, for example, after the prioritized-access parameter field 208.

In some demonstrative aspects, a usage-specific prioritized-access parameter field 214 may be configured to include information corresponding to a prioritized-access usage, for example, according to a prioritized-access rule, e.g., as described below.

In some demonstrative aspects, as shown in Fig. 2, usage-specific prioritized-access parameter field 214 may include a usage ID field 216, which may be configured to identify a usage to which the information in the usage-specific prioritized-access parameter field 214 corresponds.

In some demonstrative aspects, as shown in Fig. 2, usage ID field 216 may be set to a predefined usage ID value, for example, from a plurality of predefined usage ID values.

For example, the plurality of predefined usage ID values may be configured to identify a respective plurality of predefined prioritized-access usages.

For example, the plurality of predefined usage ID values may be configured to identify a respective plurality of predefined prioritized-access rules, for example, corresponding to the plurality of predefined prioritized-access usages.

For example, the plurality of predefined usage ID values may include a first usage ID, for example, to identify a first predefined prioritized-access usage.

For example, the first usage ID may include a first predefined usage ID value, e.g., zero, for example, to identify the first predefined prioritized-access usage.

In one example, an AP, e.g., the AP implemented by device 102 (Fig. 1), may be configured to set the usage ID field 216 in a usage-specific prioritized-access parameter field 214 to a usage ID value of zero, for example, to indicate that the usage-specific prioritized-access parameter field 214 corresponds to a predefined prioritized-access usage relating to a number of failed retransmissions, e.g., as described above.

For example, the plurality of predefined usage ID values may include a second usage ID, for example, to identify a second predefined prioritized-access usage.

For example, the second usage ID may include a second predefined usage ID value, e.g., one, for example, to identify the second predefined prioritized-access usage.

In one example, an AP, e.g., the AP implemented by device 102 (Fig. 1), may be configured to set the usage ID field 216 in a usage-specific prioritized-access parameter field 214 to a usage ID value of one, for example, to indicate that the usage-specific prioritized-access parameter field 214 corresponds to a predefined prioritized-access usage based on a traffic type, e.g., low latency traffic, e.g., as described above.

For example, the usage ID field 216 in the usage-specific prioritized-access parameter field 214 may be set to the usage ID value of one, for example, to indicate that the usage-specific prioritized-access parameter field 214 corresponds to a predefined prioritized-access usage in an rTWT SP, e.g., as described above.

In some demonstrative aspects, as shown in Fig. 2, usage-specific prioritized-access parameter field 214 may include an enable/disable ("allowed/disallowed) field 218, which may be configured to indicate whether prioritized-access according to the usage defined by the usage ID field 216 is to be enabled or disabled.

In one example, an AP, e.g., the AP implemented by device 102 (Fig. 1), may be configured to set the enable/disable ("allowed/disallowed) field 218 in a usage-specific prioritized-access parameter field 214 to an "enabled" value, e.g., one, for example, to indicate that prioritized-access according to the usage defined by the usage ID field 216 in the same usage-specific prioritized-access parameter field 214 is to be enabled, e.g., as described above.

In one example, an AP, e.g., the AP implemented by device 102 (Fig. 1), may be configured to set the enable/disable ("allowed/disallowed) field 218 in a usage-specific prioritized-access parameter field 214 to a "disabled" value, e.g., zero, for example, to indicate that prioritized-access according to the usage defined by the usage ID field 216 in the same usage-specific prioritized-access parameter field 214 is to be disabled, e.g., as described above.

In some demonstrative aspects, as shown in Fig. 2, usage-specific prioritized-access parameter field 214 may include a retransmission threshold field 220, which may be configured to indicate a retransmission threshold.

For example, an AP, e.g., the AP implemented by device 102 (Fig. 1), may be configured to set the retransmission threshold field 220 in a usage-specific prioritized-access parameter field 214 to a value, which may indicate a number of failed retransmissions before a STA is to be allowed to transmit a defer signal, e.g., as described above.

In some demonstrative aspects, as shown in Fig. 2, usage-specific prioritized-access parameter field 214 may include a service period information (Periodic Service Period) field 222, which may be configured to indicate information corresponding to a SP, e.g., during which the prioritized-access according to the usage defined by the usage ID field 216 in the same usage-specific prioritized-access parameter field 214 is to be applied.

For example, service period information field 222 may be configured to indicate one or more occurrences of the SP during which the prioritized-access according to the usage defined by the usage ID field 216 in the same usage-specific prioritized-access parameter field 214 is to be applied.

For example, service period information field 222 may be configured to indicate a start time, e.g., of a first SP, a duration, e.g., of each SP, and/or a periodicity, e.g., a periodicity interval between subsequent SPs.

In one example, service period information field 222 may be configured to include one or more TWT subelement fields, for example, to define the SP start, duration, and/or periodicity.

In some demonstrative aspects, usage-specific prioritized-access parameter field 214 may include some or all of the fields 216, 218, 220 and/or 220, and/or one or more additional or alternative fields.

Referring back to Fig. 1, in some demonstrative aspects, device 102, device 140, and/or device 160 may be configured to implement one or more operations and/or functionalities of a prioritized-access mechanism, which may be configured to provide a technical solution to support an AP in protecting STAs in a BSS of the AP, for example, against an effect, e.g., a side-effect, of reservation (defer) signals from STAs in another BSS, e.g., an OBSS, of another AP, e.g., as described below.

For example, in some use cases, deployments, and/or scenarios, some STAs and/or APs may "feel" that other STAs, e.g., of one or more OBSSs, are using the defer signal, for example, in a manner which may affect performance in their BSS.

In some demonstrative aspects, for example, in some use cases, deployments, and/or scenarios, STAs and/or APs may be allowed to request protection against use of the defer signal by STAs in other BSSs, e.g., in OBSSs.

In some demonstrative aspects, it may be defined that an AP may be allowed to include a field ("protection request field" or "protection field") in a frame, e.g., a beacon frame of the AP.

In some demonstrative aspects, it may be defined that an AP may set the protection request field to a predefined value, e.g., 1, to request other APs to disable use of the defer signal.

In some demonstrative aspects, it may be defined that a beacon from an AP including the protection request field set to 1 is to force one or more other APs, e.g., all OBSS APs that are able to receive the beacon from the AP, to not use the defer signal procedure, and to disable the usage of the defer signal for their respective associated STAs.

In some demonstrative aspects, it may be defined that an AP may be allowed to advertise a request for protection from defer signal operation, e.g., from OBSSs.

In some demonstrative aspects, it may be defined that an AP may be allowed to define and advertise in tone or more frames, e.g., beacon frames, one or more SPs, e.g., periodic SPs, during which the AP requests not to allow the use of the defer signal operation, for example, by OBSSs and/or by own associated STAs of the AP.

For example, the one or more SPs during which protection from defer signal operation is requested may be advertised, for example, using the prioritized-access element 200 (Fig. 2), e.g., as described above.

In some demonstrative aspects, it may be defined, for example, by a specification, e.g., an *IEEE 802.11 Specification* and/or any other specification, that APs ma be allowed to include the advertisement of the protection SPs in their beacons.

For example, it may be defined, for example, by a specification, e.g., an *IEEE 802.11 Specification* and/or any other specification, that the duration, periodicity and/or amount of schedules that an AP is allowed to advertise may be limited, for example, to avoid a technical issue of signaling that would completely block the defer signal prioritized-access operation.

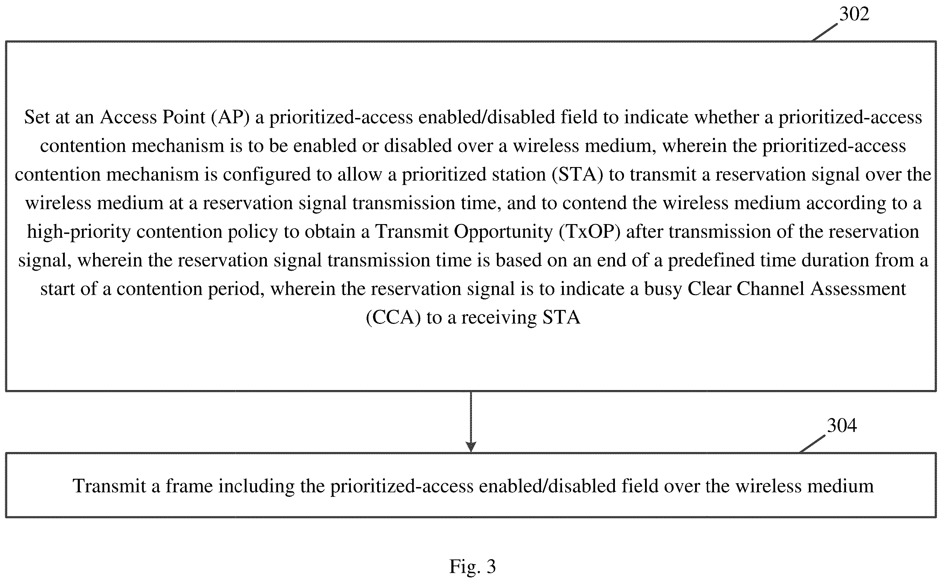

Reference is made to Fig. 3, which schematically illustrates a method of wireless medium prioritized access, in accordance with some demonstrative aspects. For example, one or more of the operations of the method of Fig. 3 may be performed by one or more elements of a system, e.g., system 100 (Fig. 1), for example, one or more wireless devices, e.g., device 102 (Fig. 1), device 140 (Fig. 1), and/or device 160 (Fig. 1), a controller, e.g., controller 124 (Fig. 1) and/or controller 154 (Fig. 1), a radio, e.g., radio 114 (Fig. 1) and/or radio 144 (Fig. 1), and/or a message processor, e.g., message processor 128 (Fig. 1) and/or message processor 158 (Fig. 1).

As indicated at block 302, the method may include setting at an AP a prioritized-access enabled/disabled field to indicate whether a prioritized-access contention mechanism is to be enabled or disabled over a wireless medium. For example, the prioritized-access contention mechanism may be configured to allow a prioritized STA to transmit a reservation signal over the wireless medium at a reservation signal transmission time, and to contend the wireless medium according to a high-priority contention policy to obtain a TxOP after transmission of the reservation signal. For example, the reservation signal transmission time may be based on an end of a predefined time duration from a start of a contention period, wherein the reservation signal is to indicate a busy CCA to a receiving STA. For example, controller 124 (Fig. 1) may be configured to cause, trigger, and/or control the AP implemented by device 102 (Fig. 1) to set the prioritized-access enabled/disabled field 218 (Fig. 2) to indicate whether the prioritized-access contention mechanism is to be enabled or disabled, e.g., as described above.

As indicated at block 304, the method may include transmitting a frame including the prioritized-access enabled/disabled field over the wireless medium. For example, controller 124 (Fig. 1) may be configured to allow the AP implemented by device 102 (Fig. 1) to transmit the frame including the prioritized-access element 200 (Fig. 2), e.g., as described above.

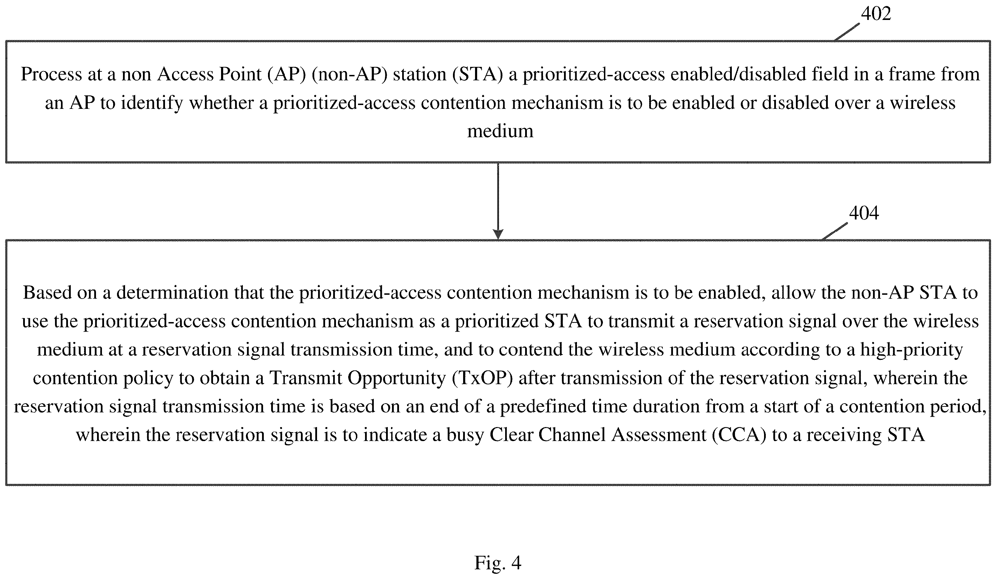

Reference is made to Fig. 4, which schematically illustrates a method of wireless medium prioritized access, in accordance with some demonstrative aspects. For example, one or more of the operations of the method of Fig. 4 may be performed by one or more elements of a system, e.g., system 100 (Fig. 1), for example, one or more wireless devices, e.g., device 102 (Fig. 1), device 140 (Fig. 1), and/or device 160 (Fig. 1), a controller, e.g., controller 124 (Fig. 1) and/or controller 154 (Fig. 1), a radio, e.g., radio 114 (Fig. 1) and/or radio 144 (Fig. 1), and/or a message processor, e.g., message processor 128 (Fig. 1) and/or message processor 158 (Fig. 1).

As indicated at block 402, the method may include processing at a non-AP STA a prioritized-access enabled/disabled field in a frame from an AP to identify whether a prioritized-access contention mechanism is to be enabled or disabled over a wireless medium. For example, controller 154 (Fig. 1) may be configured to cause, trigger, and/or control the non-AP STA implemented by device 140 (Fig. 1) to process the prioritized-access enabled/disabled field 218 (Fig. 2) in the frame from the AP to identify whether the prioritized-access contention mechanism is to be enabled or disabled, e.g., as described above.

As indicated at block 404, the method may include allowing the non-AP STA to use the prioritized-access contention mechanism as a prioritized STA, for example, based on a determination that the prioritized-access contention mechanism is to be enabled. For example, the non-AP STA may be allowed to use the prioritized-access contention mechanism as the prioritized STA, for example, to transmit a reservation signal over the wireless medium at a reservation signal transmission time, and to contend the wireless medium according to a high-priority contention policy to obtain a TxOP after transmission of the reservation signal. For example, the reservation signal transmission time may be based on an end of a predefined time duration from a start of a contention period. For example, the reservation signal may be configured to indicate a busy CCA to a receiving STA. For example, controller 154 (Fig. 1) may be configured to cause, trigger, and/or control the non-AP STA implemented by device 140 (Fig. 1) to transmit the reservation signal, for example, based on a determination that the prioritized-access contention mechanism is to be enabled according to the prioritized-access enabled/disabled field 218 (Fig. 2), e.g., as described above.

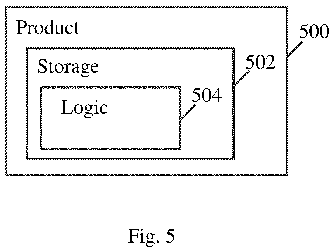

Reference is made to Fig. 5, which schematically illustrates a product of manufacture 500, in accordance with some demonstrative aspects. Product 500 may include one or more tangible computer-readable ("machine-readable") non-transitory storage media 502, which may include computer-executable instructions, e.g., implemented by logic 504, operable to, when executed by at least one computer processor, enable the at least one computer processor to implement one or more operations at device 102 (Fig. 1), device 140 (Fig. 1), device 160 (Fig. 1), controller 124 (Fig. 1), controller 154 (Fig. 1), message processor 128 (Fig. 1), message processor 158 (Fig. 1), radio 114 (Fig. 1), radio 144 (Fig. 1), transmitter 118 (Fig. 1), transmitter 148 (Fig. 1), receiver 116 (Fig. 1), and/or receiver 146 (Fig. 1); to cause device 102 (Fig. 1), device 140 (Fig. 1), device 160 (Fig. 1), controller 124 (Fig. 1), controller 154 (Fig. 1), message processor 128 (Fig. 1), message processor 158 (Fig. 1), radio 114 (Fig. 1), radio 144 (Fig. 1), transmitter 118 (Fig. 1), transmitter 148 (Fig. 1), receiver 116 (Fig. 1), and/or receiver 146 (Fig. 1) to perform, trigger and/or implement one or more operations and/or functionalities; and/or to perform, trigger and/or implement one or more operations and/or functionalities described with reference to the Figs. 1, 2, 3, and/or 4, and/or one or more operations described herein. The phrases "non-transitory machine-readable medium" and "computer-readable non-transitory storage media" may be directed to include all machine and/or computer readable media, with the sole exception being a transitory propagating signal.

In some demonstrative aspects, product 500 and/or machine readable storage media 502 may include one or more types of computer-readable storage media capable of storing data, including volatile memory, non-volatile memory, removable or non-removable memory, erasable or non-erasable memory, writeable or re-writeable memory, and the like. For example, machine readable storage media 502 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), flash memory (e.g., NOR or NAND flash memory), content addressable memory (CAM), polymer memory, phase-change memory, ferroelectric memory, silicon-oxide-nitride-oxide-silicon (SONOS) memory, a disk, a hard drive, and the like. The computer-readable storage media may include any suitable media involved with downloading or transferring a computer program from a remote computer to a requesting computer carried by data signals embodied in a carrier wave or other propagation medium through a communication link, e.g., a modem, radio or network connection.

In some demonstrative aspects, logic 504 may include instructions, data, and/or code, which, if executed by a machine, may cause the machine to perform a method, process and/or operations as described herein. The machine may include, for example, any suitable processing platform, computing platform, computing device, processing device, computing system, processing system, computer, processor, or the like, and may be implemented using any suitable combination of hardware, software, firmware, and the like.

In some demonstrative aspects, logic 504 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner or syntax, for instructing a processor to perform a certain function. The instructions may be implemented using any suitable high-level, low-level, object-oriented, visual, compiled and/or interpreted programming language, machine code, and the like.

### EXAMPLES

The following examples pertain to further aspects.

Example 1 includes an apparatus comprising logic and circuitry configured to cause an Access Point (AP) to set a prioritized-access enabled/disabled field to indicate whether a prioritized-access contention mechanism is to be enabled or disabled over a wireless medium, wherein the prioritized-access contention mechanism is configured to allow a prioritized station (STA) to transmit a reservation signal over the wireless medium at a reservation signal transmission time, and to contend the wireless medium according to a high-priority contention policy to obtain a Transmit Opportunity (TxOP) after transmission of the reservation signal, wherein the reservation signal transmission time is based on an end of a predefined time duration from a start of a contention period, wherein the reservation signal is to indicate a busy Clear Channel Assessment (CCA) to a receiving STA; and transmit a frame comprising the prioritized-access enabled/disabled field over the wireless medium.

Example 2 includes the subject matter of Example 1, and optionally, wherein the apparatus is configured to cause the AP to set the prioritized-access enabled/disabled field to a predefined prioritized-access-enabled value, based on a determination that the prioritized-access contention mechanism is to be enabled for use in a Basic Service Set (BSS) of the AP.

Example 3 includes the subject matter of Example 2, and optionally, wherein the predefined prioritized-access-enabled value is one.

Example 4 includes the subject matter of any one of Examples 1-3, and optionally, wherein the apparatus is configured to cause the AP to set the prioritized-access enabled/disabled field to a predefined prioritized-access-disabled value, based on determination that the prioritized-access contention mechanism is to be disabled for use in a Basic Service Set (BSS) of the AP.

Example 5 includes the subject matter of Example 4, and optionally, wherein the predefined prioritized-access-disabled value is zero.

Example 6 includes the subject matter of any one of Examples 1-5, and optionally, wherein the apparatus is configured to cause the AP to set the prioritized-access enabled/disabled field by setting an identified prioritized-access enabled/disabled field in a prioritized-access enabled/disabled element format comprising a plurality of prioritized-access enabled/disabled fields corresponding to a plurality of prioritized-access rules.

Example 7 includes the subject matter of Example 6, and optionally, wherein the prioritized-access enabled/disabled element format is configured to support a variable number of prioritized-access enabled/disabled fields.

Example 8 includes the subject matter of any one of Examples 1-7, and optionally, wherein the apparatus is configured to cause the AP to set prioritized-access rule information in the frame, wherein the prioritized-access rule information is configured to indicate one or more prioritized-access rules to define the prioritized STA to be allowed to use the prioritized-access contention mechanism.

Example 9 includes the subject matter of any one of Examples 1-8, and optionally, wherein the apparatus is configured to cause the AP to set a first prioritized-access enabled/disabled field in the frame to indicate whether the prioritized-access contention mechanism is to be enabled or disabled for channel access according to a first prioritized-access rule, and to set a second prioritized-access enabled/disabled field in the frame to indicate whether the prioritized-access contention mechanism is to be enabled or disabled for channel access according to a second prioritized-access rule different from the first prioritized-access rule.

Example 10 includes the subject matter of Example 9, and optionally, wherein the first prioritized-access rule is based on a traffic type, and the second prioritized-access rule is based on a count of failed retransmissions.

Example 11 includes the subject matter of Example 9 or 10, and optionally, wherein the apparatus is configured to cause the AP to set prioritized-access rule information in the frame, wherein the prioritized-access rule information is configured to indicate the first prioritized-access rule and the second prioritized-access rule.

Example 12 includes the subject matter of any one of Examples 1-11, and optionally, wherein the apparatus is configured to cause the AP to set the prioritized-access enabled/disabled field based on a determination whether the prioritized-access contention mechanism is to be enabled or disabled for use in a Basic Service Set (BSS) of the AP.

Example 13 includes the subject matter of any one of Examples 1-12, and optionally, wherein the apparatus is configured to cause the AP to set a prioritized-access disable request field in the frame to indicate a request from other APs to disable use of the prioritized-access contention mechanism.

Example 14 includes the subject matter of any one of Examples 1-13, and optionally, wherein the apparatus is configured to cause the AP to set protected Service Period (SP) information in the frame to indicate one or more protected SPs of the AP during which other APs are to disable the prioritized-access contention mechanism.

Example 15 includes the subject matter of Example 14, and optionally, wherein the apparatus is configured to cause the AP to limit at least one of a periodicity of the protected SPs, a duration of the protected SPs, or a count of the protected SPs, based on at least one predefined protected SP limitation.

Example 16 includes the subject matter of any one of Examples 1-15, and optionally, wherein the apparatus is configured to cause the AP to set the prioritized-access enabled/disabled field to indicate that the prioritized-access contention mechanism is to be disabled for use in a Basic Service Set (BSS) of the AP, based on a determination that a prioritized-access disable request field in a received frame from an other AP is set to indicate a request to disable use of the prioritized-access contention mechanism.

Example 17 includes the subject matter of any one of Examples 1-16, and optionally, wherein the apparatus is configured to cause the AP to identify a protected Service Period (SP) of an other AP based on a frame from the other AP, and to set the prioritized-access enabled/disabled field to indicate that the prioritized-access contention mechanism is to be disabled for use in a Basic Service Set (BSS) of the AP during the protected SP of the other AP.

Example 18 includes the subject matter of any one of Examples 1-17, and optionally, wherein the prioritized-access enabled/disabled field comprises a single bit field.

Example 19 includes the subject matter of any one of Examples 1-18, and optionally, wherein the frame comprises a beacon frame.

Example 20 includes the subject matter of any one of Examples 1-19, and optionally, wherein the reservation signal transmission time is immediately at the end of the predefined time duration from the start of the contention period.

Example 21 includes the subject matter of any one of Examples 1-20, and optionally, wherein the reservation signal comprises a preset reservation signal having a preset format and content.

Example 22 includes the subject matter of any one of Examples 1-21, and optionally, wherein the reservation signal comprises a preset reservation sequence.

Example 23 includes the subject matter of any one of Examples 1-22, and optionally, wherein the reservation signal comprises a Short Training Field (STF) signal.

Example 24 includes the subject matter of Example 23, and optionally, wherein the reservation signal comprises a Long Training Field (LTF) signal following the STF signal.

Example 25 includes the subject matter of any one of Examples 1-24, and optionally, wherein the reservation signal comprises a Medium Access Control (MAC) frame.

Example 26 includes the subject matter of Example 25, and optionally, wherein the MAC frame comprises a Clear to Send (CTS) frame.

Example 27 includes the subject matter of Example 25 or 26, and optionally, wherein the MAC frame is scrambled according to a preset scrambling seed defined for high-priority reservation signaling.

Example 28 includes the subject matter of any one of Examples 1-27, and optionally, wherein the reservation signal has a duration of less than 10 microseconds (us).

Example 29 includes the subject matter of any one of Examples 1-28, and optionally, wherein the reservation signal has a duration of 8 microseconds (us) or less.

Example 30 includes the subject matter of any one of Examples 1-29, and optionally, wherein the reservation signal has a duration of 4 microseconds (us) or less.

Example 31 includes the subject matter of any one of Examples 1-30, and optionally, wherein the predefined time duration is based on an Arbitration Inter-Frame Space (AIFS) corresponding to a high-priority Access Category (AC).

Example 32 includes the subject matter of Example 31, and optionally, wherein the AIFS corresponding to the high-priority AC is based on an AIFS Number (AIFSN) corresponding to the high-priority AC.

Example 33 includes the subject matter of Example 32, and optionally, wherein the AIFSN corresponding to the high-priority AC is a lowest AIFSN defined by a contention policy of the contention period.

Example 34 includes the subject matter of Example 32 or 33, and optionally, wherein the AIFSN corresponding to the high-priority AC is less than an AIFSN for a Voice AC (AC_VO).

Example 35 includes the subject matter of any one of Examples 32-34, and optionally, wherein the AIFSN corresponding to the high-priority AC is equal to 1.

Example 36 includes the subject matter of any one of Examples 1-35, and optionally, wherein the high-priority contention policy is configured according to a setting of one or more parameters of a contention policy of the contention period.

Example 37 includes the subject matter of any one of Examples 1-36, and optionally, wherein the high-priority contention policy is different from a contention policy of the contention period.

Example 38 includes the subject matter of any one of Examples 1-37, and optionally, wherein the high-priority contention policy comprises an Enhanced Distributed Channel Access (EDCA) policy.

Example 39 includes the subject matter of any one of Examples 1-38, and optionally, wherein the high-priority contention policy comprises a contention slot shorter than 9 microseconds (usec).

Example 40 includes the subject matter of any one of Examples 1-39, and optionally, wherein the AP comprises an Ultra High Reliability (UHR) AP.

Example 41 includes the subject matter of any one of Examples 1-40, and optionally, comprising at least one radio to transmit the frame from the AP.

Example 42 includes the subject matter of Example 41, and optionally, comprising one or more antennas connected to the radio, and a processor to execute instructions of an operating system.

Example 43 includes an apparatus comprising logic and circuitry configured to cause a non Access Point (AP) (non-AP) station (STA) to process a prioritized-access enabled/disabled field in a frame from an AP to identify whether a prioritized-access contention mechanism is to be enabled or disabled over a wireless medium; and based on a determination that the prioritized-access contention mechanism is to be enabled, allow the non-AP STA to use the prioritized-access contention mechanism as a prioritized STA to transmit a reservation signal over the wireless medium at a reservation signal transmission time, and to contend the wireless medium according to a high-priority contention policy to obtain a Transmit Opportunity (TxOP) after transmission of the reservation signal, wherein the reservation signal transmission time is based on an end of a predefined time duration from a start of a contention period, wherein the reservation signal is to indicate a busy Clear Channel Assessment (CCA) to a receiving STA.

Example 44 includes the subject matter of Example 43, and optionally, wherein the apparatus is configured to cause the non-AP STA to identify that the prioritized-access contention mechanism is to be enabled for use in a Basic Service Set (BSS) of the AP, based on a determination that the prioritized-access enabled/disabled field comprises a predefined prioritized-access-enabled value.

Example 45 includes the subject matter of Example 44, and optionally, wherein the predefined prioritized-access-enabled value is one.

Example 46 includes the subject matter of any one of Examples 43-45, and optionally, wherein the apparatus is configured to cause the non-AP STA to identify that the prioritized-access contention mechanism is to be disabled for use in a Basic Service Set (BSS) of the AP, based on a determination that the prioritized-access enabled/disabled field comprises a predefined prioritized-access-disabled value.

Example 47 includes the subject matter of Example 46, and optionally, wherein the predefined prioritized-access-disabled value is zero.

Example 48 includes the subject matter of any one of Examples 43-47, and optionally, wherein the apparatus is configured to cause the non-AP STA to identify the prioritized-access enabled/disabled field in a prioritized-access enabled/disabled element format comprising a plurality of prioritized-access enabled/disabled fields corresponding to a plurality of prioritized-access rules, and to allow the non-AP STA to use the prioritized-access contention mechanism as the prioritized STA based on a prioritized-access rule corresponding to the prioritized-access enabled/disabled field.

Example 49 includes the subject matter of any one of Examples 43-48, and optionally, wherein the apparatus is configured to cause the non-AP STA to process prioritized-access rule information in the frame to identify one or more prioritized-access rules to define the prioritized STA to be allowed to use the prioritized-access contention mechanism.

Example 50 includes the subject matter of any one of Examples 43-49, and optionally, wherein the apparatus is configured to cause the non-AP STA to process a first prioritized-access enabled/disabled field in the frame to identify whether the prioritized-access contention mechanism is to be enabled or disabled for channel access according to a first prioritized-access rule, and to process a second prioritized-access enabled/disabled field in the frame to identify whether the prioritized-access contention mechanism is to be enabled or disabled for channel access according to a second prioritized-access rule different from the first prioritized-access rule.

Example 51 includes the subject matter of Example 50, and optionally, wherein the first prioritized-access rule is based on a traffic type, and the second prioritized-access rule is based on a count of failed retransmissions.

Example 52 includes the subject matter of Example 50 or 51, and optionally, wherein the apparatus is configured to cause the non-AP STA to process prioritized-access rule information in the frame to identify the first prioritized-access rule and the second prioritized-access rule.

Example 53 includes the subject matter of any one of Examples 43-52, and optionally, wherein the prioritized-access enabled/disabled field comprises a single bit field.

Example 54 includes the subject matter of any one of Examples 43-53, and optionally, wherein the frame comprises a beacon frame.

Example 55 includes the subject matter of any one of Examples 43-54, and optionally, wherein the reservation signal transmission time is immediately at the end of the predefined time duration from the start of the contention period.

Example 56 includes the subject matter of any one of Examples 43-55, and optionally, wherein the reservation signal comprises a preset reservation signal having a preset format and content.

Example 57 includes the subject matter of any one of Examples 43-56, and optionally, wherein the reservation signal comprises a preset reservation sequence.

Example 58 includes the subject matter of any one of Examples 43-57, and optionally, wherein the reservation signal comprises a Short Training Field (STF) signal.

Example 59 includes the subject matter of Example 58, and optionally, wherein the reservation signal comprises a Long Training Field (LTF) signal following the STF signal.

Example 60 includes the subject matter of any one of Examples 43-59, and optionally, wherein the reservation signal comprises a Medium Access Control (MAC) frame.

Example 61 includes the subject matter of Example 60, and optionally, wherein the MAC frame comprises a Clear to Send (CTS) frame.

Example 62 includes the subject matter of Example 60 or 61, and optionally, wherein the MAC frame is scrambled according to a preset scrambling seed defined for high-priority reservation signaling.

Example 63 includes the subject matter of any one of Examples 43-62, and optionally, wherein the reservation signal has a duration of less than 10 microseconds (us).

Example 64 includes the subject matter of any one of Examples 43-63, and optionally, wherein the reservation signal has a duration of 8 microseconds (us) or less.

Example 65 includes the subject matter of any one of Examples 43-64, and optionally, wherein the reservation signal has a duration of 4 microseconds (us) or less.

Example 66 includes the subject matter of any one of Examples 43-65, and optionally, wherein the predefined time duration is based on an Arbitration Inter-Frame Space (AIFS) corresponding to a high-priority Access Category (AC).

Example 67 includes the subject matter of Example 66, and optionally, wherein the AIFS corresponding to the high-priority AC is based on an AIFS Number (AIFSN) corresponding to the high-priority AC.

Example 68 includes the subject matter of Example 67, and optionally, wherein the AIFSN corresponding to the high-priority AC is a lowest AIFSN defined by a contention policy of the contention period.

Example 69 includes the subject matter of Example 67 or 68, and optionally, wherein the AIFSN corresponding to the high-priority AC is less than an AIFSN for a Voice AC (AC_VO).

Example 70 includes the subject matter of any one of Examples 66-69, and optionally, wherein the AIFSN corresponding to the high-priority AC is equal to 1.

Example 71 includes the subject matter of any one of Examples 43-70, and optionally, wherein the high-priority contention policy is configured according to a setting of one or more parameters of a contention policy of the contention period.

Example 72 includes the subject matter of any one of Examples 43-71, and optionally, wherein the high-priority contention policy is different from a contention policy of the contention period.

Example 73 includes the subject matter of any one of Examples 43-72, and optionally, wherein the high-priority contention policy comprises an Enhanced Distributed Channel Access (EDCA) policy.

Example 74 includes the subject matter of any one of Examples 43-73, and optionally, wherein the high-priority contention policy comprises a contention slot shorter than 9 microseconds (usec).

Example 75 includes the subject matter of any one of Examples 43-74, and optionally, wherein the non-AP STA comprises an Ultra High Reliability (UHR) non-AP STA.

Example 76 includes the subject matter of any one of Examples 43-75, and optionally, comprising at least one radio to transmit the reservation signal from the non-AP STA.

Example 77 includes the subject matter of Example 76, and optionally, comprising one or more antennas connected to the radio, and a processor to execute instructions of an operating system.

Example 78 includes a wireless communication device including the apparatus of any of Examples 1-77.

Example 79 includes a mobile device including the apparatus of any of Examples 1-77.

Example 80 includes an apparatus including means for executing any of the described operations of any of Examples 1-77.

Example 81 includes a product including one or more tangible computer-readable non-transitory storage media comprising instructions operable to, when executed by at least one processor, enable the at least one processor to cause a wireless communication device to perform any of the described operations of any of Examples 1-77.

Example 82 includes an apparatus including: a memory interface; and processing circuitry configured to: perform any of the described operations of any of Examples 1-77.

Example 83 includes a method including any of the described operations of any of Examples 1-77.

Functions, operations, components and/or features described herein with reference to one or more aspects, may be combined with, or may be utilized in combination with, one or more other functions, operations, components and/or features described herein with reference to one or more other aspects, or vice versa.

While certain features have been illustrated and described herein, many modifications, substitutions, changes, and equivalents may occur to those skilled in the art. It is, therefore, to be understood that the appended claims are intended to cover all such modifications and changes as fall within the true spirit of the disclosure.

## Claims

1. An apparatus comprising:
a processor configured to cause an Ultra High Reliability, UHR, non Access Point, AP, non-AP, station, STA, to:
process a prioritized-access-enabled field in a UHR operation element received from an AP to determine whether a Defer-Signal, DS, based, DS-based, prioritized-access mechanism for accessing a wireless medium is to be enabled or disabled by the AP;
determine whether the UHR non-AP STA is to use the DS-based prioritized-access mechanism based on whether the DS-based prioritized-access mechanism is to be enabled by the AP; and
based on a determination that the UHR non-AP STA is to use the DS-based prioritized-access mechanism:
transmit a DS Clear to Send, CTS, frame to start a prioritized contention over the wireless medium; and
after transmission of the DS CTS frame, contend the wireless medium according to a prioritized contention parameter setting to obtain a Transmit Opportunity, TxOP, for transmission of data of a predefined Access Category, AC, queued by the UHR non-AP STA.

2. The apparatus of claim 1, wherein the processor is further configured to cause the UHR non-AP STA to process one or more prioritized-access parameter fields received from the AP to determine a setting of one or more parameters to be used by the UHR non-AP STA according to the DS-based prioritized-access mechanism.

3. The apparatus of claim 1 or claim 2, wherein the processor is further configured to cause the UHR non-AP STA to process a transmission threshold parameter field received from the AP to determine a number of failed transmissions before the UHR non-AP STA is to be allowed to use the DS-based prioritized-access mechanism.

4. The apparatus of any one of claims 1 to 3, wherein the processor is further configured to cause the UHR non-AP STA to process a Contention Window, CW, parameter field received from the AP to determine a CW setting to be used by the UHR non-AP STA according to the DS-based prioritized-access mechanism.

5. The apparatus of any one of claims 1 to 4, wherein the processor is further configured to cause the UHR non-AP STA to process a maximal-number-of-defer-signals field received from the AP to determine a maximal number of DS CTS frames the UHR non-AP STA is allowed to transmit, or
wherein the processor is further configured to cause the UHR non-AP STA to determine whether the UHR non-AP STA is to use the DS-based prioritized-access mechanism based on a predefined criterion relating to a number of failed transmissions of the data of the predefined AC and preferably wherein the processor is further configured to cause the UHR STA to determine that the predefined criterion is met based on failure of a defined number of transmissions of the data of the predefined AC.

6. The apparatus of any one of claims 1 to 5, wherein the processor is further configured to cause the UHR non-AP STA to identify that the DS-based prioritized-access mechanism is to be enabled for use in a Basic Service Set, BSS, of the AP based on a determination that the prioritized-access-enabled field comprises a value of one, or
wherein the processor is further configured to cause the non-AP STA to identify that the DS-based prioritized-access mechanism is to be disabled for use in a Basic Service Set, BSS, of the AP based on a determination that the DS-based prioritized-access-enabled field comprises a zero value, or
wherein the prioritized-access-enabled field is a single bit field.

7. The apparatus of any one of claims 1 to 6, wherein the processor is further configured to cause the UHR non-AP STA to transmit the DS CTS frame at a time that is based on an end of a time duration defined for the DS-based prioritized-access mechanism, preferably wherein the time duration comprises a duration of a predefined Arbitration Inter-Frame Space, AIFS, for the DS-based prioritized-access mechanism, preferably wherein the predefined AIFS is based on a predefined AIFS Number, AIFSN, for the DS-based prioritized-access mechanism.

8. The apparatus of any one of claims 1 to 7, wherein the processor is further configured to cause the UHR non-AP STA to configure the DS CTS frame according to a preset DS CTS configuration defined for the DS-based prioritized-access mechanism, or
wherein the processor is further configured to cause the UHR non-AP STA to scramble the DS CTS frame according to a preset scrambling seed defined for the DS-based prioritized-access mechanism, or
wherein the processor is further configured to cause the UHR non-AP STA to set a duration field of the DS CTS frame according to a preset duration defined for the DS-based prioritized-access mechanism, or
wherein the processor is further configured to cause the UHR non-AP STA to set a Receive Address, RA, field of the DS CTS frame according to a preset RA defined for the DS-based prioritized-access mechanism.

9. The apparatus of any one of claims 1 to 8, wherein the DS CTS frame is configured to signal to a receiving STA to defer transmission, or
wherein the prioritized contention parameter setting comprises a prioritized Enhanced Distributed Channel Access, EDCA, parameter setting, or
wherein the prioritized contention parameter setting comprises a Contention Window, CW, setting.

10. The apparatus of any one of claims 1 to 9, the apparatus further comprising at least one radio to receive the UHR operation element, and to transmit the DS CTS frame and the data of the predefined AC, preferably wherein the apparatus further comprises one or more antennas connected to the radio, and another processor to execute instructions of an operating system.

11. A method to be performed by an Ultra High Reliability, UHR, non Access Point, AP, non-AP, station, STA, the method comprising:
processing a prioritized-access-enabled field in a UHR operation element received from an AP to determine whether a Defer-Signal, DS, based, DS-based, prioritized-access mechanism for accessing a wireless medium is to be enabled or disabled by the AP;
determining whether the UHR non-AP STA is to use the DS-based prioritized-access mechanism based on whether the DS-based prioritized-access mechanism is to be enabled by the AP; and
based on a determination that the UHR non-AP STA is to use the DS-based prioritized-access mechanism:
transmitting a DS Clear to Send, CTS, frame to start a prioritized contention over the wireless medium; and
after transmission of the DS CTS frame, contending the wireless medium according to a prioritized contention parameter setting to obtain a Transmit Opportunity, TxOP, for transmission of data of a predefined Access Category, AC, queued by the UHR non-AP STA.

12. An apparatus comprising means for performing the method of claim 11.

13. An apparatus comprising:
a processor configured to cause an Ultra High Reliability, UHR, Access Point, AP, to:
set a prioritized-access-enabled field in a UHR operation element based on whether a Defer-Signal, DS, based (DS-based) prioritized-access mechanism for accessing a wireless medium is to be enabled or disabled by the UHR AP, wherein the DS-based prioritized-access mechanism is configured for a UHR non-AP station, STA, to transmit a DS Clear to Send, CTS, frame to start a prioritized contention over the wireless medium, during which the UHR non-AP STA is to contend the wireless medium according to a prioritized contention parameter setting to obtain a Transmit Opportunity, TxOP, for transmission of data of a predefined Access Category, AC, queued by the UHR non-AP STA; and
transmit a frame comprising the UHR operation element over the wireless medium.

14. The apparatus of claim 13, wherein the processor is further configured to cause the UHR AP to transmit one or more prioritized-access parameter fields configured to indicate a setting of one or more parameters to be used by the UHR non-AP STA according to the DS-based prioritized-access mechanism.

15. The apparatus of claim 13 or claim 14, wherein the processor is further configured to cause the UHR AP to transmit a transmission threshold parameter field configured to indicate a number of failed transmissions before the UHR non-AP STA is to be allowed to use the DS-based prioritized-access mechanism.

16. The apparatus of any one of claims 13 to 15, wherein the processor is further configured to cause the UHR AP to transmit a Contention Window, CW, parameter field configured to indicate a CW setting to be used by the UHR non-AP STA according to the DS-based prioritized-access mechanism.

17. The apparatus of any one of claims 13 to 16, wherein the processor is further configured to cause the UHR AP to transmit a maximal-number-of-defer-signals field configured to indicate a maximal number of DS CTS frames the UHR non-AP STA is allowed to transmit, or
wherein the processor is further configured to cause the UHR AP to set the prioritized-access-enabled field to a value of 1 based on a determination that the DS-based prioritized-access mechanism is to be enabled for use in a Basic Service Set, BSS, of the AP, or
wherein the processor is further configured to cause the UHR AP to set the prioritized-access-enabled field to a zero value based on a determination that the DS-based prioritized-access mechanism is to be disabled for use in a Basic Service Set, BSS, of the AP.

18. The apparatus of any one of claims 13 to 17, wherein the prioritized-access-enabled field is a single bit field, or
wherein the prioritized contention parameter setting comprises a prioritized Enhanced Distributed Channel Access, EDCA, parameter setting, or
wherein the prioritized contention parameter setting comprises a Contention Window, CW, setting.

19. The apparatus of any one of claims 13 to 18, further comprising at least one radio to transmit the UHR operation element, wherein preferably the apparatus further comprises one or more antennas connected to the radio, and another processor to execute instructions of an operating system.

20. A computer-readable medium comprising one or more instructions which, if executed by a processor of an Ultra High Reliability, UHR, Access Point, AP, cause the UHR AP to:
set a prioritized-access-enabled field in a UHR operation element based on whether a Defer-Signal, DS, based, DS-based, prioritized-access mechanism for accessing a wireless medium is to be enabled or disabled by the UHR AP, wherein the DS-based prioritized-access mechanism is configured for a UHR non-AP station, STA, to transmit a DS Clear to Send, CTS, frame to start a prioritized contention over the wireless medium, during which the UHR non-AP STA is to contend the wireless medium according to a prioritized contention parameter setting to obtain a Transmit Opportunity, TxOP, for transmission of data of a predefined Access Category, AC, queued by the UHR non-AP STA; and
transmit a frame comprising the UHR operation element over the wireless medium.
